# EUROPÄISCHE PATENTSCHRIFT

(11) **EP 3 245 085 B1**
(45) Veröffentlichungstag und Bekanntmachung des Hinweises auf die Patenterteilung: **12.07.2023**
(21) Anmeldenummer: 15804672.2
(22) Anmeldetag: 26.11.2015
(51) Int. Cl.: B60K 5/08, B60K 6/48, B60W 20/10, B60W 50/00, B60K 6/24, B60K 6/365

(54) **ANTRIEBSVORRICHTUNG FÜR EIN KRAFTFAHRZEUG UND KRAFTFAHRZEUG**
DRIVE DEVICE FOR A MOTOR VEHICLE AND MOTOR VEHICLE
SYSTÈME D'ENTRAÎNEMENT POUR VÉHICULE AUTOMOBILE ET VÉHICULE AUTOMOBILE

(30) Priorität: 15.01.2015 DE 102015000466
(43) Veröffentlichungstag der Anmeldung: 22.11.2017
(73) Patentinhaber: Audi AG, 85045 Ingolstadt (DE)
(72) Erfinder: STÖRMER, Markus, 92334 Berching (DE)
(86) Internationale Anmeldenummer: PCT/EP2015/002376
(87) Internationale Veröffentlichungsnummer: WO 2016/112934

(56) Entgegenhaltungen:
- DE-A1- 19 839 231
- DE-A1-102012 213 148
- DE-A1-102013 221 911
- DE-A1-102013 221 912

## Beschreibung

Die Erfindung betrifft eine Antriebsvorrichtung für ein Kraftfahrzeug.

Derartige Antriebsvorrichtungen stellen im Allgemeinen wesentliche Bestandteile des Antriebsstrangs eines Kraftfahrzeugs dar. Moderne Antriebsvorrichtungen können mehrere motorische Antriebseinrichtungen umfassen. So sind beispielsweise Antriebsvorrichtungen mit zwei unterschiedlichen motorischen Antriebseinrichtungen bekannt. Insbesondere ist die Kombination einer ersten motorischen Antriebseinrichtung in Form eines Verbrennungsmotors mit wenigstens einer weiteren motorischen Antriebseinrichtung in Form eines Elektromotors bekannt. Dieses Prinzip entsprechender Antriebsvorrichtungen ist in so genannten Hybrid-Kraftfahrzeugen realisiert.

Im Hinblick auf eine besonders energie- und somit verbrauchseffiziente Betriebsweise eines mit einer unterschiedliche motorische Antriebseinrichtungen umfassenden Antriebsvorrichtung ausgestatteten Kraftfahrzeugs ist es angestrebt, die jeweiligen motorischen Antriebseinrichtungen möglichst oft, insbesondere ständig, in einem jeweiligen antriebseinrichtungsspezifischen wirkungsgradoptimalen Momenten- und/oder Leistungskennlinienbereich zu betreiben.

In Anbetracht der Vielzahl an möglichen Kombinationen, insbesondere unterschiedlicher, motorischer Antriebseinrichtungen besteht ein steter Weiterentwicklungsbedarf entsprechender Antriebsvorrichtungen dahin, jeweilige motorische Antriebseinrichtungen stets in einem jeweiligen antriebseinrichtungsspezifischen wirkungsgradoptimalen Momenten- und/oder Leistungskennlinienbereich betreiben zu können.

Aus DE 198 39 231 A1 ist ein Antriebssystem für ein Kraftfahrzeug mit vier, insbesondere in Reihe geschalteten, Verbrennungsmotoren bekannt, wobei benachbarte Verbrennungsmotoren aneinander an- und voneinander abkuppelbar sind. Dieser Strang ist über einen Verzweigungstrieb und Kupplungen mit einer Antriebswelle eines Getriebes verbindbar, wobei das Getriebe wiederum mit einem Achsdifferential verbunden ist. Zudem ist ein Elektromotor vorgesehen, der über eine Kupplung mit dem Getriebe kuppelbar ist.

Ein weiterer Antriebsstrang ist aus DE 10 2012 213 148 A1 für ein Kraftfahrzeug bekannt. Bei diesem System sind zwei unabhängig voneinander betreibbare Verbrennungskraftmaschinen vorgesehen, wobei ein von den beiden Verbrennungskraftmaschinen zur Verfügung gestelltes Drehmoment in zumindest ein Getriebe eingeleitet ist, wobei zumindest eine Elektromaschine, insbesondere zwei Elektromaschinen, am Getriebe zur Drehmomentweitergabe ankuppelbar ist respektive sind.

Der Erfindung liegt die Aufgabe zugrunde, eine verbesserte Antriebsvorrichtung für ein Kraftfahrzeug anzugeben.

Die Aufgabe wird durch eine Antriebsvorrichtung für ein Kraftfahrzeug gelöst, welche sich durch:
- eine erste motorische Antriebseinrichtung mit wenigstens einem drehbaren Antriebselement und wenigstens eine weitere motorische Antriebseinrichtung mit wenigstens einem drehbaren Antriebselement,
- wenigstens eine mit einer kraftfahrzeugseitigen Antriebsachse koppelbare oder gekoppelte Abtriebseinrichtung mit wenigstens einem drehbaren Abtriebselement,
- wenigstens eine mit der ersten motorischen Antriebseinrichtung und/oder mit der wenigstens einen weiteren motorischen Antriebseinrichtung und/oder mit der Abtriebseinrichtung koppelbare oder gekoppelte Getriebeeinrichtung mit wenigstens einem drehbaren Getriebeelement, sowie
- wenigstens eine in unterschiedliche Kopplungs- und/oder Entkopplungszustände schaltbare Kopplungseinrichtung, welche
   zur Kopplung und/oder Entkopplung des oder wenigstens eines drehbaren Antriebselements der ersten motorischen Antriebseinrichtung mit dem oder wenigstens einem drehbaren Getriebeelement der wenigstens einen Getriebeeinrichtung, und/oder
   zur Kopplung und Entkopplung des oder wenigstens eines drehbaren Antriebselements der oder wenigstens einer weiteren motorischen Antriebseinrichtung mit dem oder wenigstens einem drehbaren Getriebeelement der wenigstens einen Getriebeeinrichtung, und/oder
   zur Kopplung und/oder Entkopplung des oder wenigstens eines drehbaren Getriebeelements der wenigstens einen Getriebeeinrichtung mit wenigstens einem drehbaren Abtriebselement der Abtriebseinrichtung eingerichtet ist, auszeichnet,
   wobei die erfindungsgemäße Antriebsvorrichtung die Merkmale des Anspruchs 1 aufweist.

Die hierin beschriebene Antriebsvorrichtung umfasst eine erste motorische Antriebseinrichtung und wenigstens eine weitere motorische Antriebseinrichtung. Die Antriebsvorrichtung umfasst somit wenigstens zwei motorische Antriebseinrichtungen (im Weiteren abgekürzt als Antriebseinrichtungen bezeichnet). Die wenigstens zwei Antriebseinrichtungen unterscheiden sich typischerweise in ihren jeweiligen antriebseinrichtungsspezifischen Momenten- und/oder Leistungskennlinien bzw. in ihren jeweiligen antriebseinrichtungsspezifischen Kennfeldern. Dabei müssen sich die jeweiligen Momenten- und Leistungskennlinien jeweiliger Antriebseinrichtungen nicht über den gesamten Drehzahlbereich jeweiliger Antriebseinrichtungen unterscheiden; die oder eine erste Antriebseinrichtung und die oder wenigstens eine weitere Antriebseinrichtung können in wenigstens einem bestimmten Drehzahlbereich bzw. -intervall unterschiedliche, insbesondere drehzahlabhängige, Momenten- und/oder Leistungskennlinien aufweisen. Für die erfindungsgemäße Antriebsvorrichtung kann konkret vorgesehen sein, dass die drei motorischen Antriebseinrichtungen in wenigstens einem bestimmten Drehzahlbereich unterschiedliche, insbesondere drehzahlabhängige, Momenten- und/oder Leistungskennlinien aufweisen.

Bei den von der Antriebsvorrichtung umfassten Antriebseinrichtungen kann es sich insbesondere um eine Kombination aus, gegebenenfalls, insbesondere im Hinblick auf ihre jeweiligen Momenten- und/oder Leistungskennlinien, unterschiedlichen, Verbrennungsmotoren und/oder Elektromotoren handeln. Entsprechend kann die oder eine erste Antriebseinrichtung z. B. als Verbrennungsmotor ausgebildet sein oder einen solchen umfassen, die oder wenigstens eine weitere Antriebseinrichtung kann ebenso als Verbrennungsmotor ausgebildet sein oder einen solchen umfassen. Hierbei werden typischerweise Verbrennungsmotoren mit unterschiedlichen Momenten- und/oder Leistungskennlinien vorgesehen. Alternativ kann die oder eine erste Antriebseinrichtung als Verbrennungsmotor ausgebildet sein oder einen solchen umfassen, die oder wenigstens eine weitere Antriebseinrichtung kann als Elektromotor ausgebildet sein oder einen solchen umfassen. Selbstverständlich ist auch eine hierzu umgekehrte Konfiguration möglich. Weiter alternativ kann die oder eine erste Antriebseinrichtung als Elektromotor ausgebildet sein oder einen solchen umfassen, die oder wenigstens eine weitere Antriebseinrichtung kann ebenso als Elektromotor ausgebildet sein oder einen solchen umfassen. Hierbei werden typischerweise Elektromotoren mit unterschiedlichen Momenten- und/oder Leistungskennlinien vorgesehen. Es ist festzuhalten, dass die Antriebsvorrichtung grundsätzlich eine beliebige Anzahl an beliebig und bedarfsgerecht miteinander kombinierbarer bzw. kombinierter Antriebseinrichtungen, d. h. insbesondere Verbrennungsmotoren und/oder Elektromotoren, umfassen kann.

Sofern die Antriebsvorrichtung mehrere Verbrennungsmotoren umfasst, weisen eine als Verbrennungsmotor ausgebildete oder einen solchen umfassende erste Antriebseinrichtung und wenigstens eine als Verbrennungsmotor ausgebildete oder einen solchen umfassende weitere Antriebseinrichtung, wie erwähnt, typischerweise unterschiedliche Momenten- und/oder Leistungskennlinien auf. Dies kann beispielsweise dadurch realisiert sein, dass ein die erste Antriebseinrichtung bildender oder von dieser umfasster erster Verbrennungsmotor und ein die wenigstens eine weitere Antriebseinrichtung bildender oder von dieser umfasster weiterer Verbrennungsmotor eine gleiche oder ungleiche Anzahl an Zylindern und/oder ein gleiches oder ungleiches Hub- und/oder Bohrungsverhältnis aufweist. Mithin kann ein die oder eine erste Antriebseinrichtung bildender oder von dieser umfasster erster Verbrennungsmotor und ein die oder wenigstens eine weitere Antriebseinrichtung bildender oder von dieser umfasster weiterer Verbrennungsmotor z. B. eine gleiche Anzahl an Zylindern mit ungleichem Hub- und/oder Bohrungsverhältnis oder eine ungleiche Anzahl an Zylindern mit gleichem Hub- und/oder Bohrungsverhältnis oder eine ungleiche Anzahl an Anzahl an Zylindern mit ungleichem Hub- und/oder Bohrungsverhältnis aufweisen.

Wie sich im Weiteren ergibt, kann es sich bei einem Verbrennungsmotor auch um einen Verbrennungsmotorteil einer übergeordneten Verbrennungsmotoreinheit handeln. Eine solche Verbrennungsmotoreinheit ist aus wenigstens zwei, typischerweise unabhängig voneinander betreibbaren, Verbrennungsmotorteilen gebildet bzw. umfasst wenigstens zwei, typischerweise unabhängig voneinander betreibbare, Verbrennungsmotorteile. Mit anderen Worten kann ein die oder eine erste Antriebseinrichtung bildender oder von dieser umfasster erster Verbrennungsmotor und ein die oder wenigstens eine weitere Antriebseinrichtung bildender oder von dieser umfasster weiterer Verbrennungsmotor jeweils einen Verbrennungsmotorteil einer wenigstens zwei Verbrennungsmotorteile umfassenden Verbrennungsmotoreinheit bilden. Ein Verbrennungsmotor kann also auch ein eine bestimmte Anzahl an Zylindern mit einem bestimmten Hub-und/oder Bohrungsverhältnis aufweisender Verbrennungsmotorteil einer mehrere Verbrennungsmotorteile umfassenden Verbrennungsmotoreinheit sein.

Für eine beispielhafte Ausführung einer entsprechenden Verbrennungsmotoreinheit mit insgesamt z. B. vier Zylindern kann eine erste Antriebseinrichtung z. B. durch einen zwei Zylinder mit einem ersten Hub- und/oder Bohrungsverhältnis aufweisenden ersten Verbrennungsmotorteil und eine weitere Antriebseinrichtung z. B. durch einen zwei Zylinder mit einem zu dem ersten Hub-und/oder Bohrungsverhältnis unterschiedlichen, insbesondere größeren, Hub-und/oder Bohrungsverhältnis aufweisenden zweiten Verbrennungsmotorteil gebildet sein. Auch in diesem Zusammenhang sind grundsätzlich beliebige Kombinationsmöglichkeiten unterschiedlicher Zylinderanzahlen und/oder unterschiedlicher Hub- und/oder Bohrungsverhältnisse zur Ausbildung einer ersten Antriebseinrichtung und wenigstens einer weiteren Antriebseinrichtung denkbar.

Die jeweiligen Antriebseinrichtungen umfassen jeweils wenigstens ein drehbares Antriebselement. Bei einem solchen Antriebselement handelt es sich typischerweise um eine Antriebswelle zur Übertragung eines Antriebsmoments auf einen mit der jeweiligen Antriebseinrichtung bzw. dem jeweiligen Antriebselement koppelbaren oder gekoppelten Kopplungspartner. Entsprechende Antriebselemente können auch selbst als Kopplungspartner erachtet werden.

Neben den wenigstens zwei Antriebseinrichtungen umfasst die hierin beschriebene Antriebsvorrichtung wenigstens eine unmittelbar oder mittelbar, d. h. unter Zwischenschaltung wenigstens einer Baueinheit, z. B. in Form einer kraftfahrzeugseitigen Getriebeeinrichtung zur Übersetzung von Drehzahlen, Momenten, etc., mit einer Antriebsachse, d. h. einer antreibbaren Vorder- oder Hinterachse, eines mit der Antriebsvorrichtung ausgestatteten Kraftfahrzeugs koppelbare oder gekoppelte Abtriebseinrichtung. Die Abtriebseinrichtung umfasst wenigstens ein drehbares Abtriebselement. Bei einem solchen Abtriebselement handelt es sich typischerweise um eine Abtriebswelle zur Übertragung eines Abtriebsmoments auf einen mit der Abtriebseinrichtung koppelbaren oder gekoppelten Kopplungspartner, insbesondere auf eine mit der Abtriebseinrichtung koppelbare oder gekoppelte kraftfahrzeugseitige Antriebsachse. Ein entsprechendes Abtriebselement kann auch selbst als Kopplungspartner erachtet werden.

Die Antriebsvorrichtung umfasst ferner wenigstens eine mit der oder einer ersten Antriebseinrichtung, d. h. insbesondere wenigstens einem drehbaren Antriebselement der oder einer ersten Antriebseinrichtung, und/oder mit der oder wenigstens einer weiteren Antriebseinrichtung, d. h. insbesondere wenigstens einem drehbaren Antriebselement der oder wenigstens einer weiteren Antriebseinrichtung, und/oder mit der wenigstens einen Abtriebseinrichtung, d. h. insbesondere wenigstens einem drehbaren Abtriebselement der oder wenigstens einer Abtriebseinrichtung, koppelbare oder gekoppelte Getriebeeinrichtung. Die Getriebeeinrichtung umfasst wenigstens ein drehbares Getriebeelement. Bei einem solchen Getriebeelement handelt es sich z. B. um eine Getriebewelle, ein Getrieberad, etc. zur Übertragung eines Moments auf ein weiteres Getriebeelement und/oder einen mit der Getriebeeinrichtung koppelbaren oder gekoppelten Kopplungspartner. Ein entsprechendes Getriebeelement kann auch selbst als Kopplungspartner erachtet werden.

Die Antriebsvorrichtung umfasst außerdem wenigstens eine in unterschiedliche Kopplungs- und Entkopplungszustände schaltbare Kopplungseinrichtung. In jeweiligen Kopplungszuständen sind wenigstens zwei antriebsvorrichtungsseitige Kopplungspartner miteinander gekoppelt. Eine solche Kopplung ermöglicht eine Drehmoment übertragende Verbindung jeweils gekoppelter Kopplungspartner. In jeweiligen Entkopplungszuständen sind wenigstens zwei antriebsvorrichtungsseitige Kopplungspartner nicht miteinander gekoppelt. Eine solche Entkopplung ermöglicht entsprechend keine Drehmoment übertragende Verbindung jeweiliger Kopplungspartner. Das Schalten der Kopplungseinrichtung in jeweilige Kopplungs- bzw. Entkopplungszustände, wobei in Anbetracht der Vielzahl an unterschiedlichen Kopplungsmöglichkeiten jeweiliger Kopplungspartner selbstverständlich auch wenigstens ein Kopplungszustand wenigstens zweier Kopplungspartner parallel zu wenigstens einem Entkopplungszustand wenigstens zweier Kopplungspartner realisiert sein kann, erfolgt typischerweise über eine der Kopplungseinrichtungselement zuordenbare oder zugeordnete Schalteinrichtung. Eine solche Schalteinrichtung kann ebenso einen Bestandteil der Antriebsvorrichtung bilden.

Wesentlich an der wenigstens einen Kopplungseinrichtung ist, dass es diese in entsprechenden Kopplungszuständen bzw. Entkopplungszuständen ermöglicht, sämtliche Kopplungspartner der Antriebsvorrichtung beliebig bzw. bedarfsgerecht miteinander zu koppeln bzw. voneinander zu entkoppeln. Die Kopplungseinrichtung ist sonach im Besonderen zur Kopplung und/oder Entkopplung des oder wenigstens eines drehbaren Antriebselements der ersten Antriebseinrichtung mit dem oder wenigstens einem drehbaren Getriebeelement der wenigstens einen Getriebeeinrichtung, und/oder zur Kopplung und Entkopplung des oder wenigstens eines drehbaren Antriebselements der oder wenigstens einer weiteren Antriebseinrichtung mit dem oder wenigstens einem drehbaren Getriebeelement der wenigstens einen Getriebeeinrichtung, und/oder zur Kopplung und/oder Entkopplung des oder wenigstens eines drehbaren Getriebeelements der wenigstens einen Getriebeeinrichtung mit wenigstens einem drehbaren Abtriebselement der Abtriebseinrichtung eingerichtet. Im Allgemeinen ist die Kopplungseinrichtung dazu eingerichtet, einen beliebigen Kopplungspartner der Antriebsvorrichtung mit wenigstens einem weiteren Kopplungspartner der Antriebsvorrichtung zu koppeln bzw. einen beliebigen Kopplungspartner der Antriebsvorrichtung von wenigstens einem weiteren Kopplungspartner der Antriebsvorrichtung zu entkoppeln.

Über die beschriebene beliebige Möglichkeit der Kopplung bzw. Entkopplung jeweiliger Kopplungspartner ist es möglich, ein mit der Antriebsvorrichtung ausgestattetes Kraftfahrzeug besonders energie- bzw. verbrauchseffizient zu betreiben. Dies bedingt sich dadurch, dass jeweilige Antriebseinrichtungen über gezielte Kopplungs- bzw. Entkopplungszustände jeweiliger Kopplungseinrichtungen in jeweiligen Betriebssituationen, insbesondere Fahrsituationen, eines mit der Antriebsvorrichtung ausgestatteten Kraftfahrzeugs in einem jeweiligen antriebseinrichtungsspezifischen wirkungsgradoptimalen bzw. -optimierten Kennfeldbereich betrieben werden können ohne Einbußen im Hinblick auf die jeweilige Betriebssituation, insbesondere Fahrsituation, in Kauf zu nehmen. Hierunter ist auch zu verstehen, dass es in bestimmten Betriebssituationen, insbesondere Fahrsituationen, zweckdienlich sein kann, nur eine oder mehrere bestimmte Antriebseinrichtungen zu betreiben, um ein mit der Antriebsvorrichtung ausgestattetes Kraftfahrzeug besonders energie- bzw. verbrauchseffizient zu betreiben. Es müssen also grundsätzlich nicht zwingend sämtliche der Antriebsvorrichtung zugehörigen Antriebseinrichtung gleichzeitig betrieben werden.

Durch jeweilige Kopplungseinrichtungen lassen sich unterschiedliche Momenten- bzw. Lastpfade bilden. In diesem Zusammenhang ist wesentlich, dass einzelne, mehrere oder alle drehbaren Getriebeelemente jeweiliger Getriebeeinrichtungen bedarfsweise festgehalten, d. h. in einen nicht drehbaren Zustand überführt, werden können. Vergleichbar mit einem Automatikgetriebe kann also jedes drehbare Getriebeelement bedarfsweise festgehalten werden.

Insgesamt ist somit eine im Hinblick auf unterschiedliche Betriebsarten bzw. - weisen, allgemein unterschiedliche Lastsituation, eines mit der Antriebsvorrichtung ausgestatteten Kraftfahrzeugs optimale Verzweigung der von jeweiligen Antriebseinrichtungen bereitstellbaren bzw. bereitgestellten Antriebsleistungen und somit eine maximale Variabilität des Antriebsstrangs eines mit der Antriebsvorrichtung ausgestatteten Kraftfahrzeugs realisierbar.

Für das Beispiel einer Fahrt mit einer konstanten ersten Geschwindigkeit oder Beschleunigung kann die hierfür erforderliche über die Antriebsvorrichtung insgesamt bereitzustellende bzw. bereitgestellte Antriebsleitung sonach über eine erste Kombination unterschiedlicher Antriebseinrichtungen und/oder eine erste Kombination unterschiedlicher Antriebseinrichtungen mit unterschiedlichen Getriebeelementen derart realisiert werden, dass wenigstens eine, gegebenenfalls alle, Antriebseinrichtungen in einem jeweiligen wirkungsgradoptimalen bzw. - optimierten Kennfeldbereich betrieben werden. Für eine Fahrt mit einer zu der ersten konstanten Geschwindigkeit oder Beschleunigung unterschiedlichen zweiten konstanten Geschwindigkeit oder Beschleunigung kann die hierfür über die Antriebsvorrichtung insgesamt bereitzustellende bzw. bereitgestellte Antriebsleitung sonach über eine zweite Kombination unterschiedlicher Antriebseinrichtungen und/oder eine zweite Kombination unterschiedlicher Antriebseinrichtungen mit unterschiedlichen Getriebeelementen derart realisiert werden, dass wenigstens eine, gegebenenfalls alle, Antriebseinrichtungen in einem jeweiligen wirkungsgradoptimalen bzw. -optimierten Kennfeldbereich betrieben werden.

Die erwähnte oder eine entsprechende Schalteinrichtung zum Schalten der wenigstens einen Kopplungseinrichtung in unterschiedliche Kopplungs- und Entkopplungszustände ist sonach insbesondere dazu eingerichtet, die jeweiligen Antriebseinrichtungen über die wenigstens eine Getriebeeinrichtung derart mit der oder wenigstens einer Abtriebseinrichtung zu koppeln, dass die jeweiligen Antriebseinrichtungen im Hinblick auf wenigstens eine in Abhängigkeit einer aktuellen oder künftigen Betriebsart bzw. -weise, allgemein einer aktuellen oder künftigen Lastsituation, eines mit der Antriebsvorrichtung ausgestatteten Kraftfahrzeugs ermittelten Zielgröße, insbesondere eine Zielgeschwindigkeit oder Zielbeschleunigung, in einem jeweiligen antriebseinrichtungsspezifischen wirkungsgradoptimalen Momenten- und/oder Leistungskennlinienbereich betreibbar oder betrieben sind.

Unter einer Betriebsart bzw. -weise eines mit der Antriebsvorrichtung ausgestatteten Kraftfahrzeugs ist beispielsweise eine fahrerbedingte Betriebsart bzw. - weise eines mit der Antriebsvorrichtung ausgestatteten Kraftfahrzeugs zu verstehen, welche der Fahrer beispielsweise durch fahrerinduzierte Beschleunigungsvorgänge des Kraftfahrzeugs ("Gas geben") bestimmt bzw. beeinflusst. Unter einer Betriebsart bzw. -weise eines mit der Antriebsvorrichtung ausgestatteten Kraftfahrzeugs kann beispielsweise auch eine einstellungsbedingte Betriebsart bzw. -weise eines mit der Antriebsvorrichtung ausgestatteten Kraftfahrzeugs zu verstehen sein, wobei der Fahrer beispielsweise durch vorherige Einstellungen z. B. Beschleunigungsvorgänge des Kraftfahrzeugs bestimmt bzw. beeinflusst. Hierunter ist beispielsweise ein so genannter Dynamik- bzw. Sportmodus zu verstehen, in welchem entsprechende Antriebseinrichtungen gemäß einer besonders dynamischen bzw. sportlichen Fahrweise, d. h. typischerweise einer Fahrweise mit hohen Drehzahlen, betrieben werden.

Selbstverständlich erhält bzw. verarbeitet die Schalteinrichtung zum Schalten der Kopplungseinrichtung in entsprechende Kopplungs- bzw. Entkopplungszustände Zielgrößen im Zusammenhang mit einer aktuellen oder künftigen Betriebsart- bzw. -weise eines mit der Antriebsvorrichtung ausgestatteten Kraftfahrzeugs. Die Schalteinrichtung kann hierfür, z. B. über einen kraftfahrzeugseitigen Datenbus, mit entsprechende Zielgrößen erstellenden kraftfahrzeugseitigen Steuereinrichtungen kommunizieren. Die Erstellung entsprechender Zielgrößen erfolgt typischerweise durch in entsprechenden kraftfahrzeugseitigen Steuereinrichtungen hinterlegte Algorithmen, welche auf Grundlage diverser, insbesondere den Fahrbetrieb eines mit der Antriebsvorrichtung ausgestatteten Kraftfahrzeugs betreffender, Betriebsparameter entsprechende Zielgrößen erstellen. Die Antriebsvorrichtung kann sonach wenigstens eine Steuereinrichtung zur Steuerung des Betriebs des Schalteinrichtung und somit der Kopplung bzw. Entkopplung der wenigstens einen Kopplungseinrichtung mit jeweiligen Kopplungspartnern umfassen.

Es wurde erwähnt, dass ein die oder eine erste Antriebseinrichtung bildender oder von dieser umfasster erster Verbrennungsmotor und ein die oder wenigstens eine weitere Antriebseinrichtung bildender oder von dieser umfasster weiterer Verbrennungsmotor Verbrennungsmotorteile einer wenigstens zwei Verbrennungsmotorteile umfassenden Verbrennungsmotoreinheit bilden können. Dabei ist es, insbesondere im Hinblick auf eine kompakte Bauweise der Antriebsvorrichtung respektive der Verbrennungsmotoreinheit, zweckmäßig, wenn der die erste Antriebseinrichtung bildende oder von dieser umfasste erste Verbrennungsmotor(teil) und der die wenigstens eine weitere Antriebseinrichtung bildende oder von diese umfasste weitere Verbrennungsmotor(teil) gemeinsam einem einen Verbrennungsraum der Verbrennungsmotoreinheit abschließenden Zylinderkopf der Verbrennungsmotoreinheit zuordenbar oder zugeordnet sind. Allgemein können die jeweilige Verbrennungsmotorteile bildenden Antriebseinrichtungen gemeinsam in einem Gehäuse, insbesondere einem Zylinderkurbelgehäuse, der Verbrennungsmotoreinheit angeordnet sein.

Die oder wenigstens eine entsprechende Getriebeeinrichtung kann z. B. als ein ein- oder mehrstufiges Planetengetriebe ausgebildet sein oder ein solches umfassen. Ein entsprechendes Planetengetriebe umfasst als drehbare Getriebeelemente wenigstens ein Sonnenrad, wenigstens einen Planetenträger mit einer Anzahl an Planetenrädern und wenigstens ein Hohlrad. Mehrstufige Planetengetriebe können mehrere Sonnenräder und/oder mehrere Planetenträger und/oder mehrere Hohlräder umfassen.

Die wenigstens eine Kopplungseinrichtung ist im Zusammenhang mit einer als ein- oder mehrstufiges Planetengetriebe ausgebildeten oder ein solches umfassenden Getriebeeinrichtung zweckmäßig dazu eingerichtet, das wenigstens eine Antriebselement der oder einer ersten Antriebseinrichtung mit dem oder wenigstens einem Sonnenrad oder dem oder wenigstens einem Planetenträger oder dem oder wenigstens einem Hohlrad des Planetengetriebes zu koppeln bzw. von dem oder wenigstens einem Sonnenrad oder dem oder wenigstens einem Planetenträger oder dem oder wenigstens einem Hohlrad des Planetengetriebes zu entkoppeln.

Die wenigstens eine Kopplungseinrichtung ist im Zusammenhang mit einer als ein- oder mehrstufiges Planetengetriebe ausgebildeten oder ein solches umfassenden Getriebeeinrichtung zweckmäßig ferner dazu eingerichtet, das wenigstens eine Antriebselement der oder wenigstens einer weiteren Antriebseinrichtung mit dem oder wenigstens einem Sonnenrad oder dem oder wenigstens einem Planetenträger oder dem oder wenigstens einem Hohlrad des Planetengetriebes zu koppeln bzw. von dem wenigstens einen Sonnenrad oder dem wenigstens einen Planetenträger oder dem wenigstens einen Hohlrad zu entkoppeln.

Die wenigstens eine Kopplungseinrichtung ist im Zusammenhang mit einer als ein- oder mehrstufiges Planetengetriebe ausgebildeten oder ein solches umfassenden Getriebeeinrichtung zweckmäßig zudem dazu eingerichtet, das wenigstens eine Abtriebselement der oder wenigstens einer Abtriebseinrichtung mit dem oder wenigstens einem Sonnenrad oder dem oder wenigstens einem Planetenträger oder dem oder wenigstens einem Hohlrad zu koppeln bzw. von dem oder wenigstens einem Sonnenrad oder dem oder wenigstens einem Planetenträger oder dem oder wenigstens einem Hohlrad des Planetengetriebes zu entkoppeln.

Die wenigstens eine Getriebeeinrichtung oder wenigstens eine, gegebenenfalls weitere, Getriebeeinrichtung kann alternativ als stufenloses Getriebe oder als Differentialgetriebe ausgebildet sein oder alternativ oder ergänzend wenigstens ein stufenloses Getriebe oder ein wenigstens ein Differentialgetriebe umfassen. Im Zusammenhang mit stufenlosen Getrieben respektive Differentialgetrieben bzw. von diesen jeweils umfassten drehbaren Getriebeelementen gelten vorstehende Erläuterungen zu der Kopplung bzw. Entkopplung jeweiliger antriebseinrichtungsseitiger Antriebselemente bzw. abtriebseinrichtungsseitiger Abtriebselemente mit jeweiligen drehbaren Getriebeelementen der beispielhaften Ausführung der bzw. einer Getriebeeinrichtung als Planetengetriebe analog.

Im Zusammenhang mit entsprechenden Kopplungseinrichtungen ist anzumerken, dass es sich bei diesen konkret z. B. um, insbesondere vermittels einer entsprechenden Schalteinrichtung schaltbare, Klauen- oder Lamellenkupplungen handeln kann. Selbstverständlich sind andere Kupplungsbauarten denkbar.

Im Weiteren werden beispielhafte Ausführungsformen entsprechender Antriebsvorrichtungen näher erläutert, welche jeweils wenigstens drei Antriebseinrichtungen umfassen:
So umfasst eine erste beispielhafte, jedoch nicht-erfindungsgemäße Ausführungsform einer Antriebsvorrichtung drei Antriebsvorrichtungen, eine Getriebeeinrichtung, wenigstens eine mit einer kraftfahrzeugseitigen antreibbaren Vorder- oder Hinterachse koppelbare oder gekoppelte Abtriebseinrichtung und mehrere Kopplungseinrichtungen. Diese Ausführungsform ist für ein Kraftfahrzeug mit einem Vorderachs- bzw. Frontantrieb oder mit einem Hinterachs- bzw. Heckantrieb vorgesehen.

Bei der ersten Antriebseinrichtung handelt es sich z. B. um einen ersten Verbrennungsmotor, bei der zweiten Antriebseinrichtung z. B. um einen zweiten Verbrennungsmotor und bei der dritten Antriebseinrichtung z. B. um einen Elektromotor. Die beiden Verbrennungsmotoren weisen typischerweise unterschiedliche Kennfelder auf. Die jeweiligen Antriebseinrichtungen können, wie erwähnt, jeweils mehrere Antriebselemente umfassen.

Gemäß der ersten Ausführungsform ist eine erste Kopplungseinrichtung zur Kopplung wenigstens eines Antriebselements einer ersten Antriebseinrichtung mit wenigstens einem Antriebselement einer dritten Antriebseinrichtung und zur Entkopplung wenigstens eines Antriebselements der ersten Antriebseinrichtung von wenigstens einem Antriebselement der dritten Antriebseinrichtung eingerichtet. Die erste Kopplungseinrichtungselement ist typischerweise zwischen die dritte Antriebseinrichtung, d. h. insbesondere einen Elektromotor, und je nach Betrachtungsweise die erste oder die zweite Antriebseinrichtung, d. h. insbesondere einen ersten oder einen zweiten Verbrennungsmotor, geschaltet.

Eine zweite Kopplungseinrichtung ist zur Kopplung wenigstens eines Antriebselements einer zweiten Antriebseinrichtung mit wenigstens einem Antriebselement der ersten Antriebseinrichtung und/oder der dritten Antriebseinrichtung und zur Entkopplung wenigstens eines Antriebselements der zweiten Antriebseinrichtung von wenigstens einem Antriebselement der ersten Antriebseinrichtung und/oder der dritten Antriebseinrichtung eingerichtet. Die zweite Kopplungseinrichtung ist typischerweise zwischen die dritte Antriebseinrichtung, d. h. insbesondere einen Elektromotor, und je nach Betrachtungsweise die erste oder die zweite Antriebseinrichtung, d. h. einen ersten oder einen zweiten Verbrennungsmotor, geschaltet.

Eine dritte Kopplungseinrichtung ist zur Kopplung eines mit mit wenigstens einem Antriebselement der ersten Antriebseinrichtung und/oder der zweiten Antriebseinrichtung und/oder der dritten Antriebseinrichtung gekoppelten Kopplungselements der dritten Kopplungseinrichtung mit wenigstens einem Kopplungselement einer der Getriebeeinrichtung antriebsseitig vorgeschalteten vierten Kopplungseinrichtung und zur Entkopplung eines mit mit wenigstens einem Antriebselement der ersten Antriebseinrichtung und/oder der zweiten Antriebseinrichtung und/oder der dritten Antriebseinrichtung gekoppelten Kopplungselements der dritten Kopplungseinrichtung von wenigstens einem Kopplungselement der der Getriebeeinrichtung antriebsseitig vorgeschalteten vierten Kopplungseinrichtung eingerichtet. Die dritte Kopplungseinrichtung ist typischerweise zwischen die erste oder die zweite Antriebseinrichtung, d. h. insbesondere einen ersten oder einen zweiten Verbrennungsmotor, und eine der Getriebeeinrichtung antriebsseitig vorgeschaltete vierte Kopplungseinrichtung geschaltet.

Die oder eine der Getriebeeinrichtung antriebsseitig vorgeschaltete vierte Kopplungseinrichtung ist zur Kopplung eines mit mit wenigstens einem Antriebselement der ersten Antriebseinrichtung und/oder der zweiten Antriebseinrichtung und/oder der dritten Antriebseinrichtung gekoppelten Kopplungselements der dritten Kopplungseinrichtung gekoppelten Kopplungselements der vierten Kopplungseinrichtung mit wenigstens einem antriebsseitigen drehbaren Getriebeelement der Getriebeeinrichtung und zur Entkopplung eines mit mit wenigstens einem Antriebselement der ersten Antriebseinrichtung und/oder der zweiten Antriebseinrichtung und/oder der dritten Antriebseinrichtung gekoppelten Kopplungselements der dritten Kopplungseinrichtung gekoppelten Kopplungselements der vierten Kopplungseinrichtung von wenigstens einem antriebsseitigen drehbaren Getriebeelement der Getriebeeinrichtung eingerichtet. Die vierte Kopplungseinrichtung ist typischerweise zwischen die dritte Kopplungseinrichtung und die Getriebeeinrichtung geschaltet.

Eine fünfte Kopplungseinrichtung ist zur Kopplung wenigstens eines abtriebsseitigen drehbaren Getriebeelements der Getriebeeinrichtung mit wenigstens einem Abtriebselement der mit einer kraftfahrzeugseitigen antreibbaren Vorder-oder Hinterachse koppelbaren oder gekoppelten Abtriebseinrichtung und zur Entkopplung wenigstens eines abtriebsseitigen drehbaren Getriebeelements der Getriebeeinrichtung von wenigstens einem Abtriebselement der mit einer kraftfahrzeugseitigen antreibbaren Vorder- oder Hinterachse koppelbaren oder gekoppelten Abtriebseinrichtung eingerichtet. Die fünfte Kopplungseinrichtung ist typischerweise zwischen die Getriebeeinrichtung und die Abtriebseinrichtung geschaltet.

Über eine entsprechende Anordnung und Konfiguration der in dieser ersten beispielhaften Ausführungsform der Antriebsvorrichtung fünf Kopplungseinrichtungen ist die weiter oben erwähnte beliebige und bedarfsgerechte Kombination sämtlicher drehbarer Antriebs- und Abtriebselemente mit sämtlichen drehbaren Getriebeelementen und somit die ebenso erwähnte maximale Variabilität im Antriebsstrang eines mit der Antriebsvorrichtung ausgestatteten Kraftfahrzeugs realisierbar.

Eine zweite beispielhafte Ausführungsform einer Antriebsvorrichtung, die eine Ausführungsform für eine erfindungsgemäße Antriebsvorrichtung darstellt, umfasst ebenso drei Antriebsvorrichtungen, jedoch nicht eine, sondern wenigstens zwei Getriebeeinrichtungen, wenigstens eine mit einer kraftfahrzeugseitigen antreibbaren Vorderachse koppelbare oder gekoppelte Abtriebseinrichtung, eine mit einer kraftfahrzeugseitigen antreibbaren Hinterachse koppelbare oder gekoppelte Abtriebseinrichtung und mehrere Kopplungseinrichtungen. Diese Ausführungsform ist für ein Kraftfahrzeug mit einem Vorderachs- bzw. Frontantrieb und/oder mit einem Hinterachs- bzw. Heckantrieb vorgesehen. Ein solches Kraftfahrzeug kann sonach entweder über die Vorderachse oder die Hinterachse oder - im Sinne eines Allradantriebs - sowohl über die Vorder- als auch über die Hinterachse angetrieben werden.

Auch hier kann es sich bei der ersten Antriebseinrichtung z. B. um einen ersten Verbrennungsmotor, bei der zweiten Antriebseinrichtung z. B. um einen zweiten Verbrennungsmotor und bei der dritten Antriebseinrichtung z. B. um einen Elektromotor handeln. Die beiden Verbrennungsmotoren weisen typischerweise unterschiedliche Kennfelder auf. Die jeweiligen Antriebseinrichtungen können, wie erwähnt, jeweils mehrere Antriebselemente umfassen.

Eine erste Kopplungseinrichtung ist zur Kopplung wenigstens eines Antriebselements einer ersten Antriebseinrichtung mit wenigstens einem Antriebselement einer zweiten Antriebseinrichtung und/oder einer dritten Antriebseinrichtung und zur Entkopplung wenigstens eines Antriebselements der ersten Antriebseinrichtung von wenigstens einem Antriebselement der zweiten Antriebseinrichtung und/oder der dritten Antriebseinrichtung eingerichtet. Die erste Kopplungseinrichtung ist typischerweise zwischen die dritte Antriebseinrichtung, d. h. einen Elektromotor, und die erste Antriebseinrichtung, d. h. einen ersten Verbrennungsmotor, geschaltet.

Eine zweite Kopplungseinrichtung ist zur Kopplung eines mit wenigstens einem Antriebselement der ersten Antriebseinrichtung und/oder der zweiten Antriebseinrichtung und/oder der dritten Antriebseinrichtung gekoppelten Kopplungselements der zweiten Kopplungseinrichtung mit wenigstens einem Kopplungselement einer einer ersten Getriebeeinrichtung antriebsseitig vorgeschalteten dritten Kopplungseinrichtung und zur Entkopplung eines mit wenigstens einem Antriebselement der ersten Antriebseinrichtung und/oder der zweiten Antriebseinrichtung und/oder der dritten Antriebseinrichtung gekoppelten Kopplungselements der zweiten Kopplungseinrichtung von wenigstens einem Kopplungselement einer der ersten Getriebeeinrichtung antriebsseitig vorgeschalteten dritten Kopplungseinrichtung eingerichtet. Die zweite Kopplungseinrichtung ist typischerweise zwischen die erste Antriebseinrichtung, d. h. einen ersten Verbrennungsmotor, und eine der ersten Getriebeeinrichtung antriebsseitig vorgeschaltete dritte Kopplungseinrichtung geschaltet.

Die oder eine der ersten Getriebeeinrichtung antriebsseitig vorgeschaltete dritte Kopplungseinrichtung ist zur Kopplung eines mit mit wenigstens einem Antriebselement der ersten Antriebseinrichtung und/oder der zweiten Antriebseinrichtung und/oder der dritten Antriebseinrichtung gekoppelten Kopplungselements der zweiten Kopplungseinrichtung gekoppelten Kopplungselements der dritten Kopplungseinrichtung mit wenigstens einem antriebsseitigen drehbaren Getriebeelement der ersten Getriebeeinrichtung und zur Entkopplung eines mit mit wenigstens einem Antriebselement der ersten Antriebseinrichtung und/oder der zweiten Antriebseinrichtung und/oder der dritten Antriebseinrichtung gekoppelten Kopplungselements der zweiten Kopplungseinrichtung gekoppelten Kopplungselements der dritten Kopplungseinrichtung von wenigstens einem antriebsseitigen drehbaren Getriebeelement der ersten Getriebeeinrichtung eingerichtet. Die dritte Kopplungseinrichtung ist typischerweise zwischen ein mit wenigstens einem Antriebselement der ersten Antriebseinrichtung und/oder der zweiten Antriebseinrichtung und/oder der dritten Antriebseinrichtung gekoppeltes Kopplungselement der zweiten Kopplungseinrichtung und die erste Getriebeeinrichtung, d. h. wenigstens ein antriebsseitiges drehbares Getriebeelement der ersten Getriebeeinrichtung, geschaltet.

Eine vierte Kopplungseinrichtung ist zur Kopplung wenigstens eines abtriebsseitigen drehbaren Getriebeelements der ersten Getriebeeinrichtung mit wenigstens einem Abtriebselement der mit einer kraftfahrzeugseitigen antreibbaren Vorderachse koppelbaren oder gekoppelten Abtriebseinrichtung und zur Entkopplung wenigstens eines abtriebsseitigen drehbaren Getriebeelements der ersten Getriebeeinrichtung von wenigstens einem Abtriebselement der mit einer kraftfahrzeugseitigen antreibbaren Vorderachse koppelbaren oder gekoppelten Abtriebseinrichtung eingerichtet. Die vierte Kopplungseinrichtung ist typischerweise zwischen die erste Getriebeeinrichtung, d. h. wenigstens ein abtriebsseitiges drehbares Getriebeelement der ersten Getriebeeinrichtung, und die mit der antreibbaren Vorderachse koppelbare oder gekoppelte Abtriebseinrichtung, d. h. ein antriebsseitiges drehbares Abtriebselement der mit der antreibbaren Vorderachse koppelbaren oder gekoppelten Abtriebseinrichtung, geschaltet.

Wie sich im Weiteren ergibt, kann die Anordnung und Konfiguration der der Antriebsvorrichtung zugehörigen Bestandteile, d. h. insbesondere der Kopplungseinrichtungen, bezüglich der dritten Antriebseinrichtung symmetrisch sein.

Eine fünfte Kopplungseinrichtung ist zur Kopplung wenigstens eines Antriebselements der zweiten Antriebseinrichtung mit wenigstens einem Antriebselement der ersten Antriebseinrichtung und/oder der dritten Antriebseinrichtung und zur Entkopplung wenigstens eines Antriebselements der zweiten Antriebseinrichtung von wenigstens einem Antriebselement der ersten Antriebseinrichtung und/oder der dritten Antriebseinrichtung eingerichtet. Die fünfte Kopplungseinrichtung ist typischerweise zwischen die dritte Antriebseinrichtung, d. h. einen Elektromotor, und die zweite Antriebseinrichtung, d. h. einen zweiten Verbrennungsmotor, geschaltet. Die fünfte Kopplungseinrichtung und die erste Kopplungseinrichtung sind bezüglich der dritten Antriebseinrichtung symmetrisch angeordnet.

Eine sechste Kopplungseinrichtung ist zur Kopplung eines mit mit wenigstens einem Antriebselement der ersten Antriebseinrichtung und/oder der zweiten Antriebseinrichtung und/oder der dritten Antriebseinrichtung gekoppelten Kopplungselements der fünften Kopplungseinrichtung mit wenigstens einem Kopplungselement einer einer zweiten Getriebeeinrichtung antriebsseitig vorgeschalteten siebten Kopplungseinrichtung und zur Entkopplung eines mit mit wenigstens einem Antriebselement der ersten Antriebseinrichtung und/oder der zweiten Antriebseinrichtung und/oder der dritten Antriebseinrichtung gekoppelten Kopplungselements der sechsten Kopplungseinrichtung von wenigstens einem Kopplungselement der der zweiten Getriebeeinrichtung antriebsseitig vorgeschalteten siebten Kopplungseinrichtung eingerichtet. Die sechste Kopplungseinrichtung ist typischerweise zwischen die zweite Antriebseinrichtung, d. h. einen zweiten Verbrennungsmotor, und eine der zweiten Getriebeeinrichtung antriebsseitig vorgeschaltete siebte Kopplungseinrichtung geschaltet. Die sechste Kopplungseinrichtung und die zweite Kopplungseinrichtung sind bezüglich der dritten Antriebseinrichtung symmetrisch angeordnet.

Die oder eine der sechsten Getriebeeinrichtung antriebsseitig vorgeschaltete siebte Kopplungseinrichtung ist zur Kopplung eines mit mit wenigstens einem Antriebselement der ersten Antriebseinrichtung und/oder der zweiten Antriebseinrichtung und/oder der dritten Antriebseinrichtung gekoppelten Kopplungselements der sechsten Kopplungseinrichtung gekoppelten Kopplungselements der siebten Kopplungseinrichtung mit wenigstens einem antriebsseitigen drehbaren Getriebeelement der zweiten Getriebeeinrichtung und zur Entkopplung eines mit mit wenigstens einem Antriebselement der ersten Antriebseinrichtung und/oder der zweiten Antriebseinrichtung und/oder der dritten Antriebseinrichtung gekoppelten Kopplungselements der sechsten Kopplungseinrichtung gekoppelten Kopplungselements der siebten Kopplungseinrichtung von wenigstens einem antriebsseitigen drehbaren Getriebeelement der zweiten Getriebeeinrichtung eingerichtet. Die siebte Kopplungseinrichtung ist typischerweise zwischen ein mit wenigstens einem Antriebselement der ersten Antriebseinrichtung und/oder der zweiten Antriebseinrichtung und/oder der dritten Antriebseinrichtung gekoppeltes Kopplungselement der sechsten Kopplungseinrichtung und die zweite Getriebeeinrichtung, d. h. wenigstens ein antriebsseitiges drehbares Getriebeelement der zweiten Getriebeeinrichtung, geschaltet. Die siebte Kopplungseinrichtung und die dritte Kopplungseinrichtung sind bezüglich der dritten Antriebseinrichtung symmetrisch angeordnet.

Schließlich ist eine achte Kopplungseinrichtung zur Kopplung wenigstens eines abtriebsseitigen drehbaren Getriebeelements der zweiten Getriebeeinrichtung mit wenigstens einem Abtriebselement der mit einer kraftfahrzeugseitigen antreibbaren Hinterachse koppelbaren oder gekoppelten Abtriebseinrichtung und zur Entkopplung wenigstens eines abtriebsseitigen drehbaren Getriebeelements der zweiten Getriebeeinrichtung von wenigstens einem Abtriebselement der mit einer kraftfahrzeugseitigen antreibbaren Hinterachse koppelbaren oder gekoppelten Abtriebseinrichtung eingerichtet. Die achte Kopplungseinrichtung ist typischerweise zwischen die zweite Getriebeeinrichtung, d. h. wenigstens ein abtriebsseitiges drehbares Getriebeelement der zweiten Getriebeeinrichtung, und die mit der antreibbaren Hinterachse koppelbare oder gekoppelte Abtriebseinrichtung, d. h. ein antriebsseitiges drehbares Abtriebselement der mit der antreibbaren Hinterachse koppelbaren oder gekoppelten Abtriebseinrichtung, geschaltet. Die achte Kopplungseinrichtung und die vierte Kopplungseinrichtung sind bezüglich der dritten Antriebseinrichtung symmetrisch angeordnet.

Über eine entsprechende Anordnung und Konfiguration der in dieser zweiten beispielhaften Ausführungsform der Antriebsvorrichtung acht Kopplungseinrichtungen ist ebenso die weiter oben erwähnte beliebige und bedarfsgerechte Kombination sämtlicher drehbarer Antriebs- und Abtriebselemente mit sämtlichen drehbaren Getriebeelementen und somit die ebenso erwähnte maximale Variabilität im Antriebsstrang eines mit der Antriebsvorrichtung ausgestatteten Kraftfahrzeugs realisierbar.

In entsprechenden Kopplungszuständen der Kopplungseinrichtungen ist über die erste Antriebseinrichtung und/oder über die zweite Antriebseinrichtung und/oder über die dritte Antriebseinrichtung, mithin über einzelne, mehrere oder alle Antriebseinrichtungen, eine Antriebsleistung auf wenigstens eine kraftfahrzeugseitige Antriebsachse, d. h. eine antreibbare Vorder- und/oder Hinterachse, aufbringbar. Im Hinblick auf eine besonders verbrauchseffiziente Betriebsart bzw. -weise, insbesondere im Zusammenhang mit einer aktuellen oder künftigen Zielgröße, insbesondere einer aktuellen oder künftigen Zielgeschwindigkeit oder Zielbeschleunigung, eines mit der Antriebsvorrichtung ausgestatteten Kraftfahrzeugs, kann sonach in bestimmten Betriebssituationen, insbesondere Fahrsituationen, eine Antriebsleistung über die erste Antriebseinrichtung, d. h. z. B. einen ersten Verbrennungsmotor, optional zusätzlich über die dritte Antriebseinrichtung, d. h. z. B. einen Elektromotor, oder über die zweite Antriebseinrichtung, d. h. z. B. einen zweiten Verbrennungsmotor, optional zusätzlich über die dritte Antriebseinrichtung, d. h. z. B. den Elektromotor, oder über die erste Antriebseinrichtung, d. h. z. B. den ersten Verbrennungsmotor, und die zweite Antriebseinrichtung, d. h. z. B. den zweiten Verbrennungsmotor, optional zusätzlich über die dritte Antriebseinrichtung, d. h. z. B. den Elektromotor, auf eine antreibbare Vorder- und/oder Hinterachse aufgebracht werden.

Die Antriebsvorrichtung kann ferner eine Steuereinrichtung umfassen, welche dazu eingerichtet ist, von jeweiligen Antriebseinrichtungen bereitstellbare bzw. bereitgestellte Antriebsleistungen über bestimmte kopplungseinrichtungsseitige Kopplungszustände zumindest zum Teil auf unterschiedliche Antriebsachsen eines mit der Antriebsvorrichtung ausgestatteten Kraftfahrzeugs aufzuteilen bzw. zu verteilen. Sonach kann über eine entsprechende Auf- bzw. Verteilung der von jeweiligen Antriebseinrichtungen bereitstellbaren oder bereitgestellten Antriebsleistungen auf eine oder mehrere antreibbare Antriebsachsen, d. h. insbesondere eine antreibbare Vorderachse und/oder eine antreibbare Hinterachse, ein reiner Front- oder Heckantrieb oder ein gemischter Front- und Heckantrieb mit einer bestimmten Auf- bzw. Verteilung der Antriebsleistung auf die Vorder- und Hinterachse eines mit der Antriebsvorrichtung ausgestatteten Kraftfahrzeugs realisiert werden.

Es ist denkbar, dass wenigstens einer Antriebseinrichtung eine mehrere Schaltstufen umfassende Schaltgetriebeeinrichtung zugeordnet ist. In diesem Fall kann die oder eine Steuereinrichtung dazu eingerichtet sein, während eines Schaltvorgangs einer einer Antriebseinrichtung zugeordneten Schaltgetriebeeinrichtung die über diese Antriebseinrichtung vor dem Schaltvorgang bereitgestellte Antriebsleistung über wenigstens eine weitere Antriebseinrichtung bereitzustellen. Derart ist ein ruckfreies Schalten realisierbar; die über die geschaltete Antriebseinrichtung eigentlich aufgebrachte Zugkraft wird während eines Schaltvorgangs dieser Antriebseinrichtung zeitweise, d. h. insbesondere während des Schaltvorgangs, über wenigstens eine weitere Antriebseinrichtung bereitgestellt.

Sofern wenigstens zwei Antriebseinrichtungen als Verbrennungsmotoren ausgebildet sind oder solche umfassen, ist es denkbar, dass jeweiligen Verbrennungsmotoren verbrennungsmotorspezifische Nebenaggregatkomponenten, insbesondere Anlassereinrichtungen, Pumpeneinrichtungen, d. h. z. B. Wasserpumpen, Triebmittel, insbesondere Riementriebe, elektrische Generatoren, d. h. z. B. Lichtmaschinen, Turbolader- oder Kompressoreinrichtungen, gemeinsam zuordenbar oder zugeordnet sind. Derart können Nebenaggregatkomponenten von mehreren Verbrennungsmotoren gemeinsam genutzt werden, was den Gesamtaufbau der Antriebsvorrichtung in effizienter Weise vereinfacht.

Zweckmäßig ist dabei an jeweiligen verbrennungsmotorseitigen Kurbelwellen wenigstens eine Freilaufeinrichtung in Richtung eines Riementriebs angeordnet. Bei Rotation einer Kurbelwelle werden entsprechende Nebenaggregatkomponenten über die Kurbelwelle (mit)angetrieben. Bei Rotation mehrerer Kurbelwellen werden die Nebenaggregatkomponenten über die im Vergleich schneller rotierende Kurbelwelle (mit)angetrieben.

Im Zusammenhang mit einer Nebenaggregatkomponente in Form einer Anlassereinrichtung zum Anlassen bzw. Starten wenigstens eines Verbrennungsmotors kann ein vermittels eines anlassereinrichtungsseitigen Aktors zwischen wenigstens zwei Positionen bewegbares, insbesondere ritzelartiges, Anlasserelement vorgesehen sein. Das Anlasserelement kann in einer ersten Position mit einem Schwungrad eines ersten Verbrennungsmotors und in einer zweiten Position, allgemein wenigstens einer weiteren Position, mit einem Schwungrad eines zweiten Verbrennungsmotors, allgemein wenigstens eines weiteren Verbrennungsmotors, zusammenwirken. Somit lassen sich mehrere Verbrennungsmotoren über eine einzige Anlassereinrichtung, d. h. über ein einziges Anlasserelement, anlassen bzw. starten.

Die Erfindung betrifft ferner ein Kraftfahrzeug, umfassend wenigstens eine wie beschriebene, erfindungsgemäße Antriebsvorrichtung. Für das Kraftfahrzeug gelten sämtliche Ausführungen im Zusammenhang mit der Antriebsvorrichtung analog.

Weitere Vorteile und Einzelheiten der Erfindung ergeben sich aus den im folgenden beschriebenen Ausführungsbeispielen sowie anhand der Zeichnung. Dabei zeigen:
- Fig. 1: eine Prinzipdarstellung einer Antriebsvorrichtung gemäß einem Ausführungsbeispiel;
- Fig. 2: eine Detailansicht der in Fig. 1 gezeigten Einzelheit II; und
- Fig. 3 - 9: je eine Prinzipdarstellung eines Kraftfahrzeugs gemäß einem Ausführungsbeispiel, wobei die Fig. 3 ein nicht-erfindungsgemäßes und die Fig. 4 - 8 ein erfindungsgemäßes Ausführungsbeispiel betreffen.

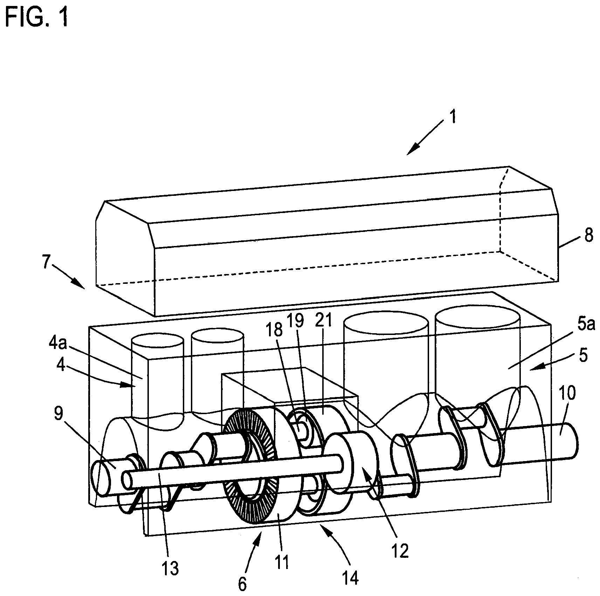

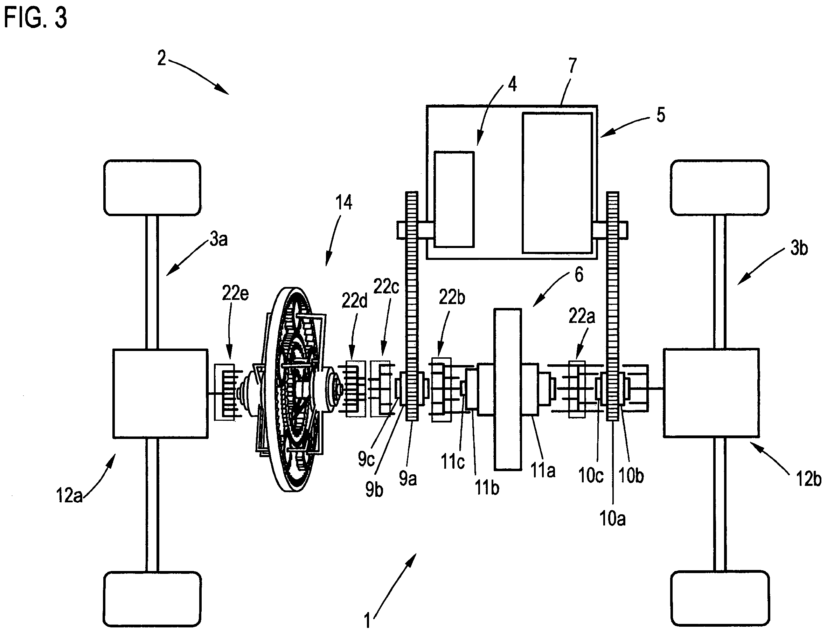

Fig. 1 zeigt eine Prinzipdarstellung einer Antriebsvorrichtung 1 für ein Kraftfahrzeug 2 (vgl. Fig. 3 - 9) gemäß einem Ausführungsbeispiel. Die Antriebsvorrichtung 1 dient im Allgemeinen dazu, eine Antriebsmoment bzw. eine Antriebsleistung zu erzeugen und auf wenigstens eine antreibbare Antriebsachse 3, 3a, 3b (vgl. Fig. 3 - 9) eines mit der Antriebsvorrichtung 1 ausgestatteten Kraftfahrzeugs 2 aufzubringen.

Die Antriebsvorrichtung 1 umfasst drei motorische Antriebseinrichtungen 4 - 6. Eine erste Antriebseinrichtung 4 ist durch einen ersten Verbrennungsmotor, eine zweite Antriebseinrichtung 5 durch einen zweiten Verbrennungsmotor und eine dritte Antriebseinrichtung 6 durch einen zwischen die erste und die zweite Antriebseinrichtung 4, 5, mithin die beiden Verbrennungsmotoren, geschalteten Elektromotor gebildet.

Die die erste und die zweite Antriebseinrichtung 4, 5 bildenden Verbrennungsmotoren sind als Verbrennungsmotorteile einer Verbrennungsmotoreinheit 7 ausgebildet. Die Verbrennungsmotoreinheit 7 umfasst in dem in Fig. 1 gezeigten Ausführungsbeispiel insgesamt vier Zylinder. Zwei Zylinder 4a mit einem ersten Hub- und/oder Bohrungsverhältnis bilden den ersten Verbrennungsmotor und somit die erste Antriebseinrichtung 4, zwei Zylinder 5a mit einem zweiten, im Vergleich zu dem ersten Hub- und/oder Bohrungsverhältnis größeren Hub- und/oder Bohrungsverhältnis bilden den zweiten Verbrennungsmotor und somit die zweite Antriebseinrichtung 5. Die beiden Verbrennungsmotoren und somit die Antriebseinrichtungen 4, 5 können unabhängig voneinander betrieben werden.

Ersichtlich sind der die erste Antriebseinrichtung 4 bildende erste Verbrennungsmotor(teil) und der zweite Antriebseinrichtung 5 bildende zweite Verbrennungsmotor(teil) gemeinsam einem einen Verbrennungsraum der Verbrennungsmotoreinheit 7 abschließenden Zylinderkopf 8 der Verbrennungsmotoreinheit 7 zugeordnet. Allgemein können die jeweilige Verbrennungsmotorteile bildenden Antriebseinrichtungen 4, 5 gemeinsam in einem Gehäuse, insbesondere einem Zylinderkurbelgehäuse, der Verbrennungsmotoreinheit 7 angeordnet sein.

Die jeweiligen Antriebseinrichtungen 4 - 6 umfassen jeweils wenigstens ein drehbares Antriebselement 9 - 11. Das der ersten Antriebseinrichtung 4 zugehörige Antriebselement 9 ist eine Kurbelwelle des ersten Verbrennungsmotor(teils), das der zweiten Antriebseinrichtung 5 zugehörige Antriebselement 10 ist eine Kurbelwelle des zweiten Verbrennungsmotor(teils) und das der dritten Antriebseinrichtung 6 zugehörige Antriebselement 11 ist der Rotor des Elektromotors.

Die Antriebsvorrichtung 1 umfasst ferner eine Abtriebseinrichtung 12. Die Abtriebseinrichtung 12 ist unmittelbar oder mittelbar, d. h. unter Zwischenschaltung wenigstens einer Baueinheit, z. B. in Form einer kraftfahrzeugseitigen Getriebeeinrichtung (nicht gezeigt) zur Übersetzung von Drehzahlen, Momenten, etc., mit einer Antriebsachse 3, d. h. einer antreibbaren Vorder- oder Hinterachse 3a, 3b, eines mit der Antriebsvorrichtung 1 ausgestatteten Kraftfahrzeugs 2 koppelbar oder gekoppelt.

Die Abtriebseinrichtung 12 umfasst ein drehbares Abtriebselement 13. Das der Abtriebseinrichtung 12 zugehörige Abtriebselement 13 ist eine Abtriebswelle.

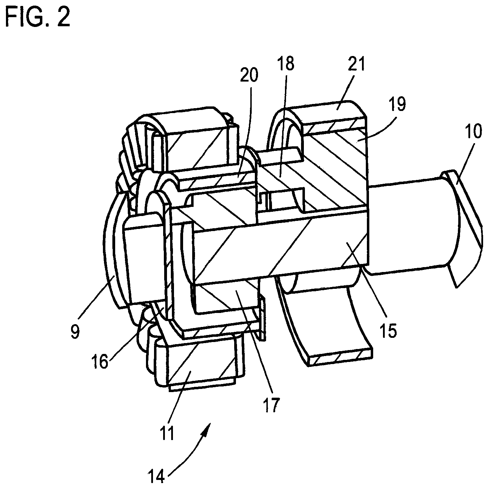

Die jeweiligen drehbaren Antriebselemente 9 - 11 wie auch das Abtriebselement 13 sind jeweils mit einer Getriebeeinrichtung 14 in Form eines vier Wellenanschlussmöglichkeiten aufweisenden, mehrstufigen Planetengetriebes koppelbar bzw. gekoppelt. Wie sich aus Fig. 2 ergibt, umfasst das mehrstufige Planetengetriebe als drehbare Getriebeelemente in koaxialer Anordnung ein Sonnenrad 15, einen ersten Planetenträger 16 mit einer Mehrzahl an Planetenrädern 17, einen zweiten Planetenträger 18 mit einer Mehrzahl an Planetenrädern 19, ein erstes Hohlrad 20 und ein zweites Hohlrad 21. Anhand der Fig. 1, 2 ist zu erkennen, dass das erste Antriebselement 9 mit dem ersten Planetenträger 16, das zweite Antriebselement 10 mit dem Sonnenrad 15, das dritte Antriebselement 11 mit dem ersten Hohlrad 20 und das Abtriebselement 13 mit dem zweiten Hohlrad 21 koppelbar bzw. gekoppelt ist.

Die Koppelbarkeit der jeweiligen Antriebselemente 9 - 11 wie auch des Abtriebselements 13 mit den jeweiligen drehbaren Getriebeelementen der Getriebeeinrichtung 14 erfolgt über wenigstens eine Kopplungseinrichtung 22 (vgl. Fig. 3 - 9). Bei einer solchen Kopplungseinrichtung 22 kann es sich z. B. um eine Klauen- oder Lamellenkupplung handeln.

Die der Antriebsvorrichtung 1 zugehörige Kopplungseinrichtung 22 ist vermittels einer oder mehrerer Schalteinrichtungen (nicht gezeigt) in unterschiedliche Kopplungs- bzw. Entkopplungszustände schaltbar. In jeweiligen Kopplungszuständen sind wenigstens zwei antriebsvorrichtungsseitige Kopplungspartner, d. h. Antriebselemente 9 - 11, Abtriebselemente 13 und Getriebeelemente, miteinander gekoppelt. Eine solche Kopplung ermöglicht eine Drehmoment übertragende Verbindung jeweils gekoppelter Kopplungspartner. In jeweiligen Entkopplungszuständen sind wenigstens zwei antriebsvorrichtungsseitige Kopplungspartner nicht miteinander gekoppelt. Eine solche Entkopplung ermöglicht entsprechend keine Drehmoment übertragende Verbindung jeweiliger Kopplungspartner.

Über entsprechende Kopplungszustände bzw. Entkopplungszustände der oder jeweiliger Kopplungseinrichtungen 22 ist es möglich, sämtliche Kopplungspartner der Antriebsvorrichtung 1 beliebig bzw. bedarfsgerecht miteinander zu koppeln bzw. voneinander zu entkoppeln. Die Kopplungseinrichtung 22 ist sonach zur Kopplung und/oder Entkopplung wenigstens eines beliebigen antriebsvorrichtungsseitigen Kopplungspartners mit bzw. von wenigstens einem beliebigen antriebsvorrichtungsseitigen Kopplungspartner eingerichtet.

Über die beliebige Möglichkeit der Kopplung bzw. Entkopplung jeweiliger Kopplungspartner ist es möglich, ein mit der Antriebsvorrichtung 1 ausgestattetes Kraftfahrzeug 2 besonders energie- bzw. verbrauchseffizient zu betreiben. Dies bedingt sich dadurch, dass jeweilige Antriebseinrichtungen 4 - 6 über gezielte Kopplungs- bzw. Entkopplungszustände jeweiliger Kopplungseinrichtungen 22 in jeweiligen Betriebssituationen, insbesondere Fahrsituationen, in einem jeweiligen antriebseinrichtungsspezifischen wirkungsgradoptimalen bzw. -optimierten Kennfeldbereich betrieben werden können ohne Einbußen im Hinblick auf die jeweilige Betriebssituation, insbesondere Fahrsituation, in Kauf zu nehmen. Hierunter ist auch zu verstehen, dass es in bestimmten Betriebssituationen, insbesondere Fahrsituationen, zweckdienlich sein kann, nur eine oder mehrere bestimmte Antriebseinrichtungen 4 - 6 zu betreiben, um ein mit der Antriebsvorrichtung 1 ausgestattetes Kraftfahrzeug 2 besonders energie- bzw. verbrauchseffizient zu betreiben. Es müssen also grundsätzlich nicht zwingend sämtliche Antriebseinrichtungen 4 - 6 gleichzeitig betrieben werden.

Insgesamt ist somit eine im Hinblick auf unterschiedliche Betriebsarten bzw. - weisen, allgemein unterschiedliche Lastsituation, eines mit der Antriebsvorrichtung 1 ausgestatteten Kraftfahrzeugs 2 optimale Verzweigung der von jeweiligen Antriebseinrichtungen 4 - 6 bereitstellbaren bzw. bereitgestellten Antriebsleistungen und somit eine maximale Variabilität des Antriebsstrangs eines mit der Antriebsvorrichtung 1 ausgestatteten Kraftfahrzeugs 2 realisierbar.

Eine entsprechende Schalteinrichtung zum Schalten jeweiliger Kopplungseinrichtung 22 in unterschiedliche Kopplungs- und Entkopplungszustände ist sonach dazu eingerichtet, die jeweiligen Antriebseinrichtungen 4 - 6 über die wenigstens eine Getriebeeinrichtung 14 derart mit der Abtriebseinrichtung 12 zu koppeln, dass die jeweiligen Antriebseinrichtungen 4 - 6 im Hinblick auf wenigstens eine in Abhängigkeit einer aktuellen oder künftigen Betriebsart bzw. -weise, allgemein einer aktuellen oder künftigen Lastsituation, eines mit der Antriebsvorrichtung 1 ausgestatteten Kraftfahrzeugs 2 ermittelten Zielgröße, insbesondere eine Zielgeschwindigkeit oder Zielbeschleunigung, in einem jeweiligen antriebseinrichtungsspezifischen wirkungsgradoptimalen Momenten- und/oder Leistungskennlinienbereich betreibbar oder betrieben sind.

Unter einer Betriebsart bzw. -weise eines mit der Antriebsvorrichtung 1 ausgestatteten Kraftfahrzeugs 2 ist beispielsweise eine fahrerbedingte Betriebsart bzw. -weise eines mit der Antriebsvorrichtung 1 ausgestatteten Kraftfahrzeugs 2 zu verstehen, welche der Fahrer beispielsweise durch fahrerinduzierte Beschleunigungsvorgänge des Kraftfahrzeugs 2 ("Gas geben") bestimmt bzw. beeinflusst. Unter einer Betriebsart bzw. -weise eines mit der Antriebsvorrichtung 1 ausgestatteten Kraftfahrzeugs 2 kann jedoch auch eine einstellungsbedingte Betriebsart bzw. -weise eines mit der Antriebsvorrichtung 1 ausgestatteten Kraftfahrzeugs 2 zu verstehen sein, wobei der Fahrer beispielsweise durch vorherige Einstellungen z. B. Beschleunigungsvorgänge des Kraftfahrzeugs 2 bestimmt bzw. beeinflusst. Hierunter ist beispielsweise ein so genannter Dynamik- bzw. Sportmodus zu verstehen, in welchem entsprechende Antriebseinrichtungen 4 - 6 gemäß einer besonders dynamischen bzw. sportlichen Fahrweise, d. h. typischerweise einer Fahrweise mit hohen Drehzahlen, betrieben werden.

Selbstverständlich erhält bzw. verarbeitet eine entsprechende Schalteinrichtung zum Schalten jeweiliger Kopplungseinrichtungen 22 in entsprechende Kopplungs- bzw. Entkopplungszustände entsprechende Zielgrößen im Zusammenhang mit einer aktuellen oder künftigen Betriebsart- bzw. -weise eines mit der Antriebsvorrichtung 1 ausgestatteten Kraftfahrzeugs 2. Eine entsprechende Schalteinrichtung kann hierfür über einen kraftfahrzeugseitigen Datenbus mit entsprechende Zielgrößen erstellenden kraftfahrzeugseitigen Steuereinrichtungen (nicht gezeigt) kommunizieren. Die Erstellung entsprechender Zielgrößen erfolgt typischerweise durch in entsprechenden kraftfahrzeugseitigen Steuereinrichtungen hinterlegte Algorithmen, welche auf Grundlage diverser, insbesondere den Fahrbetrieb eines mit der Antriebsvorrichtung 1 ausgestatteten Kraftfahrzeugs 2 betreffender, Betriebsparameter entsprechende Zielgrößen erstellen.

Für den in den in den Fig. 1 und 2 gezeigten Ausführungsbeispielen, wonach zwei Antriebseinrichtungen 4, 5 als Verbrennungsmotoren ausgebildet sind, ist es denkbar, dass jeweiligen Verbrennungsmotoren verbrennungsmotorspezifische Nebenaggregatkomponenten (nicht gezeigt), insbesondere Anlassereinrichtungen, Pumpeneinrichtungen, d. h. z. B. Wasserpumpen, Triebmittel, insbesondere Riementriebe, elektrische Generatoren, d. h. z. B. Lichtmaschinen, Turbolader- oder Kompressoreinrichtungen, gemeinsam zuordenbar oder zugeordnet sind. Derart können Nebenaggregatkomponenten von mehreren Verbrennungsmotoren gemeinsam genutzt werden, was den Gesamtaufbau der Antriebsvorrichtung 1 in effizienter Weise vereinfacht.

Zweckmäßig ist dabei an jeweiligen verbrennungsmotorseitigen Kurbelwellen (vgl. Fig. 1, 2, Antriebselemente 9, 10) wenigstens eine Freilaufeinrichtung (nicht gezeigt) in Richtung eines Riementriebs (nicht gezeigt) angeordnet. Bei Rotation einer Kurbelwelle werden entsprechende Nebenaggregatkomponenten über die Kurbelwelle (mit)angetrieben. Bei Rotation mehrerer Kurbelwellen werden die Nebenaggregatkomponenten über die im Vergleich schneller rotierende Kurbelwelle (mit)angetrieben.

Im Zusammenhang mit einer Nebenaggregatkomponente in Form einer Anlassereinrichtung zum Anlassen bzw. Starten wenigstens eines Verbrennungsmotors kann ein vermittels eines anlassereinrichtungsseitigen Aktors zwischen wenigstens zwei Positionen bewegbares, insbesondere ritzelartiges, Anlasserelement (nicht gezeigt) vorgesehen sein. Das Anlasserelement kann in einer ersten Position mit einem Schwungrad des ersten Verbrennungsmotor(teil)s und in einer zweiten Position mit einem Schwungrad des zweiten Verbrennungsmotor(teil)s zusammenwirken. Somit lassen sich beide Verbrennungsmotoren über eine einzige Anlassereinrichtung, d. h. über ein einziges Anlasserelement, anlassen bzw. starten.

Im Weiteren werden mit Bezug auf die Fig. 3 - 8 Ausführungsbeispiele entsprechender Antriebsvorrichtungen 1 näher erläutert. Die in den Fig. 3 - 8 gezeigten Antriebsvorrichtungen 1 umfassen die drei im Zusammenhang mit dem in den Fig. 1, 2 gezeigten Ausführungsbeispiel beschriebenen Antriebseinrichtungen 4 -6.

Die in dem nicht-erfindungsgemäßen Ausführungsbeispiel gemäß Fig. 3 gezeigte Antriebsvorrichtung 1 umfasst neben den jeweils mehrere Antriebselemente 9a - 9c, 10a - 10c, 11a - 11c aufweisenden Antriebsvorrichtungen 4 - 6, eine Getriebeeinrichtung 14 in Form eines mehrstufigen Planetengetriebes, eine mit einer kraftfahrzeugseitigen antreibbaren Vorderachse 3a koppelbare oder gekoppelte Abtriebseinrichtung 12a und mehrere Kopplungseinrichtungen 22a - 22e. Diese Ausführungsform ist für ein Kraftfahrzeug 2 mit einem Vorderachsantrieb vorgesehen. Es wird im Weiteren zudem erläutert, dass nachfolgende Ausführungen analog für ein Kraftfahrzeug 2 mit einem Hinterachs- bzw. Heckantrieb gelten. Mögliche Momenten- bzw. Leistungspfade sind durch die durchgezogenen Linien angedeutet.

Eine erste Kopplungseinrichtung 22a ist zur Kopplung eines Antriebselements 10a - 10c der zweiten Antriebseinrichtung 5 mit wenigstens einem Antriebselement 11a - 11c der dritten Antriebseinrichtung 6 und zur Entkopplung wenigstens eines Antriebselements 10a - 10c der zweiten Antriebseinrichtung 5 von wenigstens einem Antriebselement 11a - 11c der dritten Antriebseinrichtung 6 eingerichtet. Ersichtlich ist die erste Kopplungseinrichtung 22a zwischen die dritte Antriebseinrichtung 6 und die zweite Antriebseinrichtung 5 geschaltet.

Bei einem Kraftfahrzeug 2 mit einem Hinterachs- bzw. Heckantrieb wäre die erste Kopplungseinrichtung 22a zur Kopplung eines Antriebselements 9a - 9c der ersten Antriebseinrichtung 4 mit wenigstens einem Antriebselement 11a - 11c der dritten Antriebseinrichtung 6 und zur Entkopplung wenigstens eines Antriebselements 9a - 9c der ersten Antriebseinrichtung 4 von wenigstens einem Antriebselement 11a - 11c der dritten Antriebseinrichtung 6 eingerichtet. Die erste Kopplungseinrichtung 22a wäre entsprechend zwischen die dritte Antriebseinrichtung 6 und die erste Antriebseinrichtung 4 geschaltet.

Eine zweite Kopplungseinrichtung 22b ist zur Kopplung wenigstens eines Antriebselements 9a - 9c der ersten Antriebseinrichtung 4 mit wenigstens einem Antriebselement 10a - 10c der zweiten Antriebseinrichtung 5 und/oder wenigstens einem Antriebselement 11a - 11c der dritten Antriebseinrichtung 6 und zur Entkopplung wenigstens eines Antriebselements 9a - 9c der ersten Antriebseinrichtung 4 von wenigstens einem Antriebselement 10a - 10c der zweiten Antriebseinrichtung 5 und/oder wenigstens einem Antriebselement 11a - 11c der dritten Antriebseinrichtung 6 eingerichtet. Ersichtlich ist die zweite Kopplungseinrichtung 22b zwischen die dritte Antriebseinrichtung 6 und die erste Antriebseinrichtung 4 geschaltet.

Bei einem Kraftfahrzeug 2 mit einem Hinterachs- bzw. Heckantrieb wäre die zweite Kopplungseinrichtung 22b zur Kopplung wenigstens eines Antriebselements 10a - 10c der zweiten Antriebseinrichtung 5 mit wenigstens einem Antriebselement 9a - 9c der ersten Antriebseinrichtung 4 und/oder wenigstens einem Antriebselement 11a - 11c der dritten Antriebseinrichtung 6 und zur Entkopplung wenigstens eines Antriebselements 10a - 10c der zweiten Antriebseinrichtung 5 von wenigstens einem Antriebselement 9a - 9c der ersten Antriebseinrichtung 4 und/oder wenigstens einem Antriebselement 11a - 11c der dritten Antriebseinrichtung 6 eingerichtet. Die zweite Kopplungseinrichtung 22b wäre entsprechend zwischen die dritte Antriebseinrichtung 6 und die zweite Antriebseinrichtung 5 geschaltet.

Eine dritte Kopplungseinrichtung 22c ist zur Kopplung eines mit mit wenigstens einem Antriebselement 9a - 9c der ersten Antriebseinrichtung 4 und/oder wenigstens einem Antriebselement 10a - 10c der zweiten Antriebseinrichtung 5 und/oder wenigstens einem Antriebselement 11a - 11c der dritten Antriebseinrichtung 6 gekoppelten Kopplungselements (nicht gezeigt) der dritten Kopplungseinrichtung 22c mit wenigstens einem Kopplungselement (nicht gezeigt) einer der Getriebeeinrichtung 14 antriebsseitig vorgeschalteten vierten Kopplungseinrichtung 22d und zur Entkopplung eines mit mit wenigstens einem Antriebselement 9a - 9c der ersten Antriebseinrichtung 4 und/oder wenigstens einem Antriebselement 10a - 10c der zweiten Antriebseinrichtung 5 und/oder wenigstens einem Antriebselement 11a - 11c der dritten Antriebseinrichtung 6 gekoppelten Kopplungselements der dritten Kopplungseinrichtung 22c von wenigstens einem Kopplungselement der der Getriebeeinrichtung 14 antriebsseitig vorgeschalteten vierten Kopplungseinrichtung 22d eingerichtet. Die dritte Kopplungseinrichtung 22c ist zwischen die erste Antriebseinrichtung 4 und die bzw. eine der Getriebeeinrichtung 14 antriebsseitig vorgeschaltete vierte Kopplungseinrichtung 22d geschaltet.

Bei einem Kraftfahrzeug 2 mit einem Hinterachs- bzw. Heckantrieb wäre die dritte Kopplungseinrichtung 22c ebenso zur Kopplung eines mit mit wenigstens einem Antriebselement 9a - 9c der ersten Antriebseinrichtung 4 und/oder wenigstens einem Antriebselement 10a - 10c der zweiten Antriebseinrichtung 5 und/oder wenigstens einem Antriebselement 11a - 11c der dritten Antriebseinrichtung 6 gekoppelten Kopplungselements der dritten Kopplungseinrichtung 22c mit wenigstens einem Kopplungselement einer der Getriebeeinrichtung 14 (heck)antriebsseitig vorgeschalteten vierten Kopplungseinrichtung 22d und ebenso zur Entkopplung eines mit mit wenigstens einem Antriebselement 9a - 9c der ersten Antriebseinrichtung 4 und/oder wenigstens einem Antriebselement 10a - 10c der zweiten Antriebseinrichtung 5 und/oder wenigstens einem Antriebselement 11a - 11c der dritten Antriebseinrichtung 6 gekoppelten Kopplungselements der dritten Kopplungseinrichtung 22c von wenigstens einem Kopplungselement der der Getriebeeinrichtung 14 (heck)antriebsseitig vorgeschalteten vierten Kopplungseinrichtung 22d eingerichtet. Die dritte Kopplungseinrichtung 22c wäre zwischen die zweite Antriebseinrichtung 5 und die bzw. eine der Getriebeeinrichtung 14 (heck)antriebsseitig vorgeschaltete vierte Kopplungseinrichtung 22d geschaltet.

Die oder eine der Getriebeeinrichtung 14 antriebsseitig vorgeschaltete vierte Kopplungseinrichtung 22d ist zur Kopplung eines mit mit wenigstens einem Antriebselement 9a - 9c der ersten Antriebseinrichtung 4 und/oder wenigstens einem Antriebselement 10a - 10c der zweiten Antriebseinrichtung 5 und/oder wenigstens einem Antriebselement 11a - 11c der dritten Antriebseinrichtung 6 gekoppelten Kopplungselements (nicht gezeigt) der dritten Kopplungseinrichtung 22c gekoppelten Kopplungselements (nicht gezeigt) der vierten Kopplungseinrichtung 22d mit wenigstens einem antriebsseitigen drehbaren Getriebeelement (nicht bezeichnet) der Getriebeeinrichtung 14 und zur Entkopplung eines mit mit wenigstens einem Antriebselement 9a - 9c der ersten Antriebseinrichtung 4 und/oder wenigstens einem Antriebselement 10a - 10c der zweiten Antriebseinrichtung 5 und/oder wenigstens einem Antriebselement 11a - 11c der dritten Antriebseinrichtung 6 gekoppelten Kopplungselements der dritten Kopplungseinrichtung 22c gekoppelten Kopplungselements der vierten Kopplungseinrichtung 22d von wenigstens einem antriebsseitigen drehbaren Getriebeelement der Getriebeeinrichtung 14 eingerichtet. Die vierte Kopplungseinrichtung 22d ist zwischen die dritte Kopplungseinrichtung 22c und die Getriebeeinrichtung 14 geschaltet.

Bei einem Kraftfahrzeug 2 mit einem Hinterachs- bzw. Heckantrieb wäre die vierte Kopplungseinrichtung 22d ebenso zur Kopplung eines mit mit wenigstens einem Antriebselement 9a - 9c der ersten Antriebseinrichtung 4 und/oder wenigstens einem Antriebselement 10a - 10c der zweiten Antriebseinrichtung 5 und/oder wenigstens einem Antriebselement 11a - 11c der dritten Antriebseinrichtung 6 gekoppelten Kopplungselements der dritten Kopplungseinrichtung 22c gekoppelten Kopplungselements der vierten Kopplungseinrichtung 22d mit wenigstens einem (heck)antriebsseitigen drehbaren Getriebeelement der Getriebeeinrichtung 14 und zur Entkopplung eines mit mit wenigstens einem Antriebselement 9a - 9c der ersten Antriebseinrichtung 4 und/oder wenigstens einem Antriebselement 10a - 10c der zweiten Antriebseinrichtung 5 und/oder wenigstens einem Antriebselement 11a - 11c der dritten Antriebseinrichtung 6 gekoppelten Kopplungselements der dritten Kopplungseinrichtung 22c gekoppelten Kopplungselements der vierten Kopplungseinrichtung 22d von wenigstens einem (heck)antriebsseitigen drehbaren Getriebeelement der Getriebeeinrichtung 14 eingerichtet. Die vierte Kopplungseinrichtung 22d wäre ebenso zwischen die dritte Kopplungseinrichtung 22c und die Getriebeeinrichtung 14 geschaltet.

Eine fünfte Kopplungseinrichtung 22e ist zur Kopplung wenigstens eines abtriebsseitigen drehbaren Getriebeelements (nicht bezeichnet) der Getriebeeinrichtung 14 mit wenigstens einem Abtriebselement (nicht gezeigt) der mit der kraftfahrzeugseitigen antreibbaren Vorderachse 3a koppelbaren oder gekoppelten Abtriebseinrichtung 12a und zur Entkopplung wenigstens eines abtriebsseitigen drehbaren Getriebeelements der Getriebeeinrichtung 14 von wenigstens einem Abtriebselement der mit der kraftfahrzeugseitigen antreibbaren Vorderachse 3a koppelbaren oder gekoppelten Abtriebseinrichtung 12a eingerichtet. Die fünfte Kopplungseinrichtung 22e ist zwischen die Getriebeeinrichtung 14 und die Abtriebseinrichtung 12a geschaltet.

Bei einem Kraftfahrzeug 2 mit einem Hinterachs- bzw. Heckantrieb wäre die fünfte Kopplungseinrichtung 22e zur Kopplung wenigstens eines abtriebsseitigen drehbaren Getriebeelements der Getriebeeinrichtung 14 mit wenigstens einem Abtriebselement der mit der kraftfahrzeugseitigen antreibbaren Hinterachse 3b koppelbaren oder gekoppelten Abtriebseinrichtung 12b und zur Entkopplung wenigstens eines abtriebsseitigen drehbaren Getriebeelements der Getriebeeinrichtung 14 von wenigstens einem Abtriebselement der mit der kraftfahrzeugseitigen antreibbaren Hinterachse 3b koppelbaren oder gekoppelten Abtriebseinrichtung 12b eingerichtet. Die fünfte Kopplungseinrichtung 22e wäre zwischen die Getriebeeinrichtung 14 und die Abtriebseinrichtung 12b geschaltet.

Über eine entsprechende Anordnung und Konfiguration der in dem in Fig. 3 gezeigten Ausführungsbeispiel der Antriebsvorrichtung 1 fünf Kopplungseinrichtungen 22a - 22e ist die erwähnte beliebige und bedarfsgerechte Kombination sämtlicher drehbarer Antriebselemente 9a - 9c, 10a - 10c, 11a - 11c und Abtriebselemente 13 mit sämtlichen drehbaren Getriebeelementen und somit eine maximale Variabilität im Antriebsstrang des mit der Antriebsvorrichtung 1 ausgestatteten Kraftfahrzeugs 2 realisierbar.

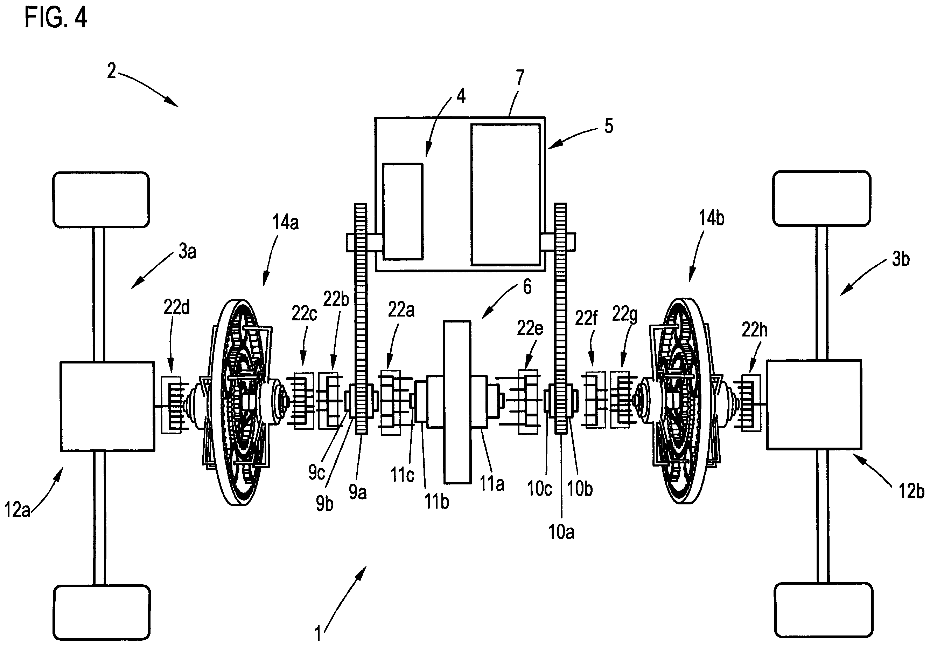

Die in dem erfindungsgemäßen Ausführungsbeispiel gemäß Fig. 4 gezeigte Antriebsvorrichtung 1 umfasst ebenso die drei Antriebsvorrichtungen 4 - 6, jedoch nicht eine, sondern zwei, jeweils als mehrstufige Planetengetriebe ausgebildete Getriebeeinrichtungen 14a, 14b, wenigstens eine mit einer kraftfahrzeugseitigen antreibbaren Vorderachse 3a koppelbare oder gekoppelte Abtriebseinrichtung 12a, eine mit einer kraftfahrzeugseitigen antreibbaren Hinterachse 3b koppelbare oder gekoppelte Abtriebseinrichtung 12b und mehrere Kopplungseinrichtungen 22a - 22h. Die in Fig. 4 gezeigte Antriebsvorrichtung 1 ist für ein Kraftfahrzeug 2 mit einem Vorderachs- bzw. Frontantrieb und/oder mit einem Hinterachs- bzw. Heckantrieb vorgesehen. Ein solches Kraftfahrzeug 2 ist entweder über die Vorderachse 3a oder die Hinterachse 3b oder - im Sinne eines Allradantriebs - sowohl über die Vorderachse 3a als auch über die Hinterachse 3b antreibbar. Analog zu Fig. 3 sind mögliche Momenten- bzw. Leistungspfade durch die durchgezogenen Linien angedeutet.

Eine erste Kopplungseinrichtung 22a ist zur Kopplung wenigstens eines Antriebselements 9a - 9c der ersten Antriebseinrichtung 4 mit wenigstens einem Antriebselement 10a - 10c der zweiten Antriebseinrichtung 5 und/oder wenigstens einem Antriebselement 11a - 11c der dritten Antriebseinrichtung 6 und zur Entkopplung wenigstens eines Antriebselements 9a - 9c der ersten Antriebseinrichtung 4 von wenigstens einem Antriebselement 10a - 10c der zweiten Antriebseinrichtung 5 und/oder wenigstens einem Antriebselement 11a - 11c der dritten Antriebseinrichtung 6 eingerichtet. Die erste Kopplungseinrichtung 22a ist zwischen die dritte Antriebseinrichtung 6 und die erste Antriebseinrichtung 4 geschaltet.

Eine zweite Kopplungseinrichtung 22b ist zur Kopplung eines mit wenigstens einem Antriebselement 9a - 9c der ersten Antriebseinrichtung 4 und/oder wenigstens einem Antriebselement 10a - 10c der zweiten Antriebseinrichtung 5 und/oder wenigstens einem Antriebselement 11a - 11c der dritten Antriebseinrichtung 6 gekoppelten Kopplungselements (nicht gezeigt) der zweiten Kopplungseinrichtung 22b mit wenigstens einem Kopplungselement (nicht gezeigt9 einer der ersten Getriebeeinrichtung 14a (front)antriebsseitig vorgeschalteten dritten Kopplungseinrichtung 22c und zur Entkopplung des mit wenigstens einem Antriebselement 9a - 9c der ersten Antriebseinrichtung 4 und/oder wenigstens einem Antriebselement 10a - 10c der zweiten Antriebseinrichtung 5 und/oder wenigstens einem Antriebselement 11a - 11c der dritten Antriebseinrichtung 6 gekoppelten Kopplungselements der zweiten Kopplungseinrichtung 22b von wenigstens einem Kopplungselement der der ersten Getriebeeinrichtung 14a (front)antriebsseitig vorgeschalteten dritten Kopplungseinrichtung 22c eingerichtet. Die zweite Kopplungseinrichtung 22b ist zwischen die erste Antriebseinrichtung 4 und eine der ersten Getriebeeinrichtung 14a (front)antriebsseitig vorgeschaltete dritte Kopplungseinrichtung 22c geschaltet.

Die oder eine der ersten Getriebeeinrichtung 14a (front) antriebsseitig vorgeschaltete dritte Kopplungseinrichtung 22c ist zur Kopplung eines mit mit wenigstens einem Antriebselement 9a -9c der ersten Antriebseinrichtung 4 und/oder wenigstens einem Antriebselement 10a - 10c der zweiten Antriebseinrichtung 5 und/oder wenigstens einem Antriebselement 11a - 11c der dritten Antriebseinrichtung 6 gekoppelten Kopplungselements (nicht gezeigt) der zweiten Kopplungseinrichtung 22b gekoppelten Kopplungselements (nicht gezeigt) der dritten Kopplungseinrichtung 22c mit wenigstens einem (front)antriebsseitigen drehbaren Getriebeelement (nicht bezeichnet) der ersten Getriebeeinrichtung 14a und zur Entkopplung des mit mit wenigstens einem Antriebselement 9a - 9c der ersten Antriebseinrichtung 4 und/oder wenigstens einem Antriebselement 10a - 10c der zweiten Antriebseinrichtung 5 und/oder wenigstens einem Antriebselement 11a - 11c der dritten Antriebseinrichtung 6 gekoppelten Kopplungselements der zweiten Kopplungseinrichtung 22b gekoppelten Kopplungselements der dritten Kopplungseinrichtung 22c von wenigstens einem antriebsseitigen drehbaren Getriebeelement der ersten Getriebeeinrichtung 14a eingerichtet. Die dritte Kopplungseinrichtung 22c ist zwischen das mit wenigstens einem Antriebselement 9a - 9c der ersten Antriebseinrichtung 4 und/oder wenigstens einem Antriebselement 10a - 10c der zweiten Antriebseinrichtung 5 und/oder wenigstens einem Antriebselement 11a - 11c der dritten Antriebseinrichtung 6 gekoppeltes Kopplungselement der zweiten Kopplungseinrichtung 22b und die erste Getriebeeinrichtung 14a geschaltet.

Eine vierte Kopplungseinrichtung 22d ist zur Kopplung wenigstens eines abtriebsseitigen drehbaren Getriebeelements (nicht bezeichnet) der ersten Getriebeeinrichtung 14a mit wenigstens einem Abtriebselement (nicht gezeigt) der mit der kraftfahrzeugseitigen antreibbaren Vorderachse 3a koppelbaren oder gekoppelten Abtriebseinrichtung 12a und zur Entkopplung wenigstens eines abtriebsseitigen drehbaren Getriebeelements der ersten Getriebeeinrichtung 14a von wenigstens einem Abtriebselement der mit der kraftfahrzeugseitigen antreibbaren Vorderachse 3a koppelbaren oder gekoppelten Abtriebseinrichtung 12a eingerichtet. Die vierte Kopplungseinrichtung 22d ist zwischen die erste Getriebeeinrichtung 14a und die mit der antreibbaren Vorderachse 3a koppelbare oder gekoppelte Abtriebseinrichtung 12a geschaltet.

Wie sich im Weiteren ergibt, ist die Anordnung und Konfiguration der vorstehend beschriebenen vier Kopplungseinrichtungen 22a - 22d mit den im Weiteren beschriebenen Kopplungseinrichtungen 22e-22h symmetrisch bezüglich der dritten Antriebseinrichtung 6.

Eine fünfte Kopplungseinrichtung 22e ist zur Kopplung wenigstens eines Antriebselements 10a - 10c der zweiten Antriebseinrichtung 5 mit wenigstens einem Antriebselement 9a - 9c der ersten Antriebseinrichtung 4 und/oder wenigstens einem Antriebselement 11a - 11c der dritten Antriebseinrichtung 6 und zur Entkopplung wenigstens eines Antriebselements 10a - 10c der zweiten Antriebseinrichtung 5 von wenigstens einem Antriebselement 9a -9c der ersten Antriebseinrichtung 4 und/oder von wenigstens einem Antriebselement 11a - 11c der dritten Antriebseinrichtung 6 eingerichtet. Die fünfte Kopplungseinrichtung 22e ist zwischen die dritte Antriebseinrichtung 6 und die zweite Antriebseinrichtung 5 geschaltet. Ersichtlich sind fünfte Kopplungseinrichtung 22e und die erste Kopplungseinrichtung 22e bezüglich der dritten Antriebseinrichtung 6 symmetrisch angeordnet.

Eine sechste Kopplungseinrichtung 22f ist zur Kopplung eines mit mit wenigstens einem Antriebselement 9a - 9c der ersten Antriebseinrichtung 4 und/oder wenigstens einem Antriebselement 10a - 10c der zweiten Antriebseinrichtung 5 und/oder wenigstens einem Antriebselement 11a - 11c der dritten Antriebseinrichtung 6 gekoppelten Kopplungselements (nicht gezeigt) der fünften Kopplungseinrichtung 22e mit wenigstens einem Kopplungselement (nicht gezeigt) einer der zweiten Getriebeeinrichtung 14b (heck)antriebsseitig vorgeschalteten siebten Kopplungseinrichtung 22g und zur Entkopplung des mit mit wenigstens einem Antriebselement 9a - 9c der ersten Antriebseinrichtung 4 und/oder wenigstens einem Antriebselement 10a - 10c der zweiten Antriebseinrichtung 5 und/oder wenigstens einem Antriebselement 11a - 11c der dritten Antriebseinrichtung 6 gekoppelten Kopplungselements der sechsten Kopplungseinrichtung 22f von wenigstens einem Kopplungselement der der zweiten Getriebeeinrichtung 14b (heck)antriebsseitig vorgeschalteten siebten Kopplungseinrichtung 22g eingerichtet. Die sechste Kopplungseinrichtung 22f ist zwischen die zweite Antriebseinrichtung 4 und die der zweiten Getriebeeinrichtung 14b (heck)antriebsseitig vorgeschaltete siebte Kopplungseinrichtung 22g geschaltet. Ersichtlich sind die sechste Kopplungseinrichtung 22f und die zweite Kopplungseinrichtung 22b bezüglich der dritten Antriebseinrichtung 6 symmetrisch angeordnet.

Die oder eine der sechsten Getriebeeinrichtung 22f (heck)antriebsseitig vorgeschaltete siebte Kopplungseinrichtung 22g ist zur Kopplung eines mit mit wenigstens einem Antriebselement 9a - 9c der ersten Antriebseinrichtung 4 und/oder wenigstens einem Antriebselement 10a - 10c der zweiten Antriebseinrichtung 5 und/oder wenigstens einem Antriebselement 11a - 11c der dritten Antriebseinrichtung 6 gekoppelten Kopplungselements (nicht gezeigt) der sechsten Kopplungseinrichtung 22f gekoppelten Kopplungselements (nicht gezeigt) der siebten Kopplungseinrichtung 22g mit wenigstens einem antriebsseitigen drehbaren Getriebeelement (nicht bezeichnet) der zweiten Getriebeeinrichtung 14b und zur Entkopplung des mit mit wenigstens einem Antriebselement 9a - 9c der ersten Antriebseinrichtung 4 und/oder wenigstens einem Antriebselement 10a - 10c der zweiten Antriebseinrichtung 5 und/oder wenigstens einem Antriebselement 11a - 11c der dritten Antriebseinrichtung 6 gekoppelten Kopplungselements der sechsten Kopplungseinrichtung 22f gekoppelten Kopplungselements der siebten Kopplungseinrichtung 22g von wenigstens einem (heck)antriebsseitigen drehbaren Getriebeelement der zweiten Getriebeeinrichtung 14b eingerichtet. Die siebte Kopplungseinrichtung 22g ist zwischen ein mit wenigstens einem Antriebselement 9a - 9c der ersten Antriebseinrichtung 4 und/oder wenigstens einem Antriebselement 10a - 10c der zweiten Antriebseinrichtung 5 und/oder wenigstens einem Antriebselement 11a - 11c der dritten Antriebseinrichtung 6 gekoppeltes Kopplungselement der sechsten Kopplungseinrichtung 22f und die zweite Getriebeeinrichtung 14b geschaltet. Ersichtlich sind die siebte Kopplungseinrichtung 22g und die dritte Kopplungseinrichtung 22c bezüglich der dritten Antriebseinrichtung 6 symmetrisch angeordnet.

Schließlich ist eine achte Kopplungseinrichtung 22h zur Kopplung wenigstens eines (heck)abtriebsseitigen drehbaren Getriebeelements (nicht bezeichnet) der zweiten Getriebeeinrichtung 14b mit wenigstens einem Abtriebselement (nicht gezeigt) der mit der kraftfahrzeugseitigen antreibbaren Hinterachse 3b koppelbaren oder gekoppelten Abtriebseinrichtung 12b und zur Entkopplung wenigstens eines abtriebsseitigen drehbaren Getriebeelements der zweiten Getriebeeinrichtung 14b von wenigstens einem Abtriebselement der mit der kraftfahrzeugseitigen antreibbaren Hinterachse koppelbaren oder gekoppelten Abtriebseinrichtung 12b eingerichtet. Die achte Kopplungseinrichtung 22h ist zwischen die zweite Getriebeeinrichtung 14b und die mit der antreibbaren Hinterachse 3b koppelbare oder gekoppelte Abtriebseinrichtung 12b geschaltet.

Ersichtlich sind die achte Kopplungseinrichtung 22h und die vierte Kopplungseinrichtung 22d bezüglich der dritten Antriebseinrichtung 6 symmetrisch angeordnet.

Über eine entsprechende Anordnung und Konfiguration der in dem in Fig. 4 gezeigten Ausführungsbeispiel der Antriebsvorrichtung 1 acht Kopplungseinrichtungen 22a - 22h ist die erwähnte beliebige und bedarfsgerechte Kombination sämtlicher drehbarer Antriebselemente 9a - 9c, 10a - 10c, 11a - 11c und Abtriebselemente 13 mit sämtlichen drehbaren Getriebeelementen und somit eine maximale Variabilität im Antriebsstrang des mit der Antriebsvorrichtung 1 ausgestatteten Kraftfahrzeugs 2 realisierbar.

In entsprechenden Kopplungszuständen der Kopplungseinrichtungen 22a 22h ist über die erste Antriebseinrichtung 4 und/oder über die zweite Antriebseinrichtung 6 und/oder über die dritte Antriebseinrichtung 6, mithin über einzelne, mehrere oder alle Antriebseinrichtungen 4-6, eine Antriebsleistung auf die antreibbare Vorderachse 3a und/oder die antreibbare Hinterachse 3b aufbringbar. Im Hinblick auf eine besonders verbrauchseffiziente Betriebsart bzw. -weise, insbesondere im Zusammenhang mit einer aktuellen oder künftigen Zielgröße, insbesondere einer aktuellen oder künftigen Zielgeschwindigkeit oder Zielbeschleunigung, des mit der Antriebsvorrichtung 1 ausgestatteten Kraftfahrzeugs 2, kann sonach in bestimmten Betriebssituationen, insbesondere Fahrsituationen, eine Antriebsleistung über die erste Antriebseinrichtung, d. h. den im Vergleich "kleineren" ersten Verbrennungsmotor, optional zusätzlich über die dritte Antriebseinrichtung 6, d. h. den Elektromotor, oder über die zweite Antriebseinrichtung 5, d. h. den im Vergleich "größeren" zweiten Verbrennungsmotor, optional zusätzlich über die dritte Antriebseinrichtung 6, d. h. den Elektromotor, oder über die erste Antriebseinrichtung 4, d. h. den im Vergleich "kleineren" ersten Verbrennungsmotor, und die zweite Antriebseinrichtung 5, d. h. den im Vergleich "größeren" zweiten Verbrennungsmotor, optional zusätzlich über die dritte Antriebseinrichtung 6, d. h. den Elektromotor, auf die antreibbare Vorderachse 3a und/oder die antreibbare Hinterachse 3b aufgebracht werden.

Die Antriebsvorrichtung 1 kann ferner eine Steuereinrichtung umfassen, welche dazu eingerichtet ist, von jeweiligen Antriebseinrichtungen 4 - 6 bereitstellbare bzw. bereitgestellte Antriebsleistungen über bestimmte kopplungseinrichtungsseitige Kopplungszustände zumindest zum Teil auf unterschiedliche Antriebsachsen des mit der Antriebsvorrichtung 1 ausgestatteten Kraftfahrzeugs 2 aufzuteilen bzw. zu verteilen. Sonach kann über eine entsprechende Auf- bzw. Verteilung der von jeweiligen Antriebseinrichtungen 4 - 6 bereitstellbaren oder bereitgestellten Antriebsleistungen auf die antreibbare Vorderachse 3a und/oder die antreibbare Hinterachse 3b, ein reiner Front- oder Heckantrieb oder ein gemischter Front- und Heckantrieb mit einer bestimmten Auf- bzw. Verteilung der Antriebsleistung auf die Vorderachse 3a und die Hinterachse 3b des mit der Antriebsvorrichtung 1 ausgestatteten Kraftfahrzeugs 2 realisiert werden.

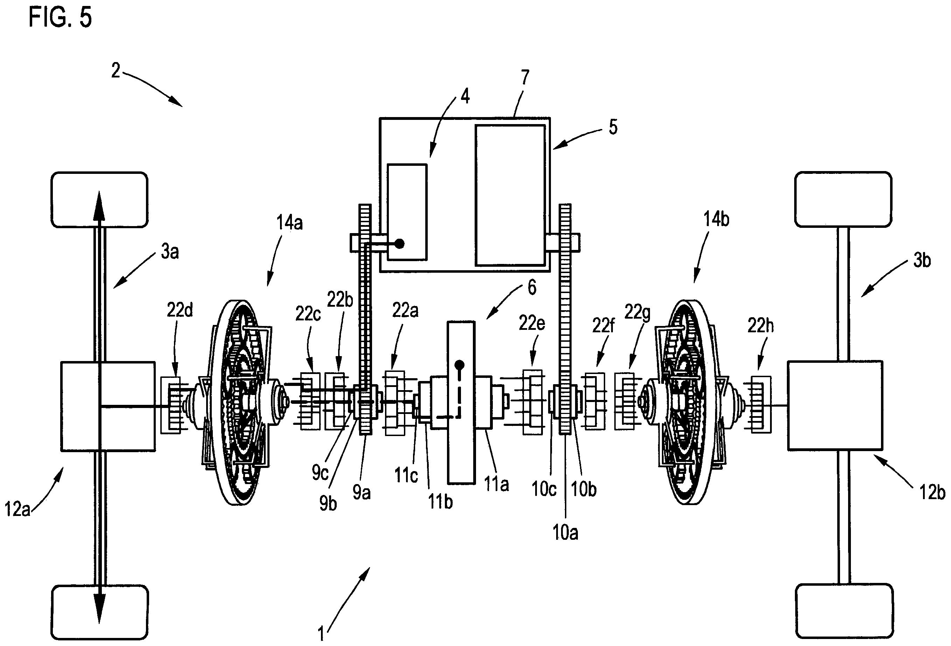

Vorstehende Ausführungen werden anhand der in den Fig. 5 - 8 gezeigten Ausführungsbeispiele unterschiedlicher Konfigurationsmöglichkeiten der Antriebsvorrichtung 1 näher erläutert. Die in den in den Fig. 5 - 8 gezeigten Ausführungsbeispielen jeweils gezeigte Konfiguration der Antriebsvorrichtung 1 entspricht der Konfiguration der Antriebsvorrichtung 1 gemäß dem in Fig. 4 gezeigten, erfindungsgemäßen Ausführungsbeispiel.

In dem in Fig. 5 gezeigten Ausführungsbeispiel ist ein Beispiel einer für einen besonders energie- bzw. verbrauchseffizienten und emissionsreduzierten Antrieb des mit der Antriebsvorrichtung 1 ausgestatteten Kraftfahrzeugs 2 vorgesehenen Konfiguration der Antriebsvorrichtung 1 veranschaulicht. Der Antrieb des Kraftfahrzeugs 2 erfolgt allein über die Vorderachse 3a. Wie durch die Pfeile angedeutet, wird die Antriebsleistung durch die erste Antriebseinrichtung 4, d. h. den im Vergleich "kleineren" Verbrennungsmotor, und/oder über die dritte Antriebseinrichtung 6, d. h. den Elektromotor, bereitgestellt. Es ist also auch ein rein elektrischer Antrieb des Kraftfahrzeugs 2 möglich. Die Antriebsleistung lässt sich über eine Regelung der Drehzahl der ersten Antriebseinrichtung 4 und/oder der dritten Antriebseinrichtung 6 steuern. Über die Kopplungseinrichtungen 22a - 22d und die Getriebeeinrichtung 14a lassen sich unterschiedliche Momenten- bzw. Leistungspfade realisieren, damit kann ein vergleichsweise breiter Geschwindigkeitsbereich abgebildet werden.

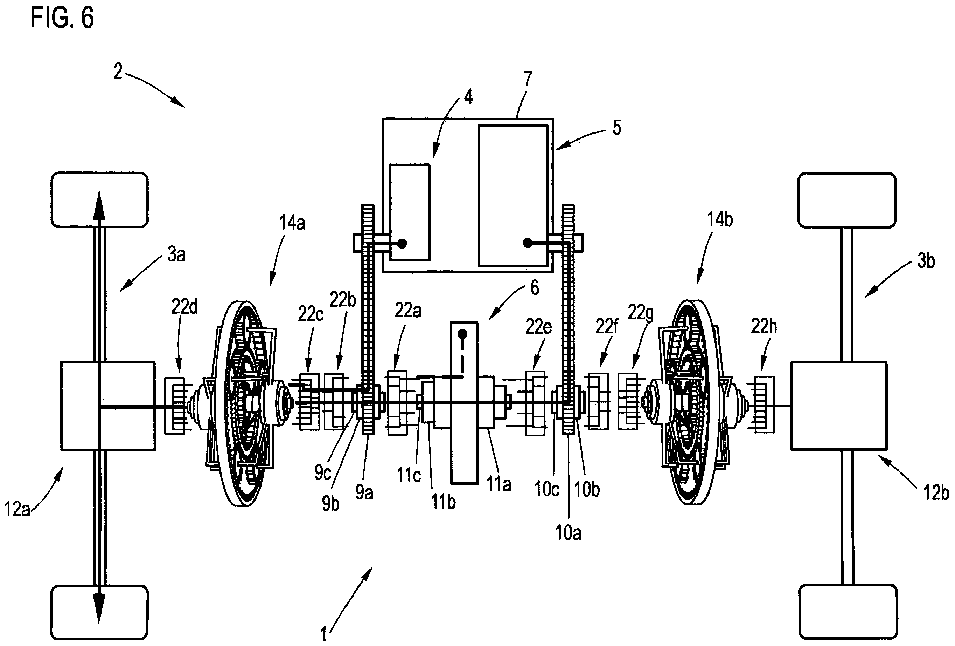

In dem in Fig. 6 gezeigten Ausführungsbeispiel ist ein Beispiel einer für höhere Lastsituationen des mit der Antriebsvorrichtung 1 ausgestatteten Kraftfahrzeugs 2 vorgesehenen Konfiguration der Antriebsvorrichtung 1 veranschaulicht. Der Antrieb des Kraftfahrzeugs 2 erfolgt wiederum allein über die Vorderachse 3a. Wie durch die Pfeile angedeutet, wird die Antriebsleistung durch die erste Antriebseinrichtung 4, d. h. den im Vergleich "kleineren" Verbrennungsmotor, und die zweite Antriebseinrichtung 5, d. h. den im Vergleich "größeren" Verbrennungsmotor, und optional zusätzlich über die dritte Antriebseinrichtung 6, d. h. den Elektromotor, bereitgestellt. Die Antriebsleistung lässt sich über eine Regelung der Drehzahl der ersten Antriebseinrichtung 4, der zweiten Antriebseinrichtung 5 und (optional) der dritten Antriebseinrichtung 6 steuern. Analog zu dem in Fig. 5 gezeigten Ausführungsbeispiel lassen sich über die Kopplungseinrichtungen 22a - 22e und die Getriebeeinrichtung 14a unterschiedliche Momenten- bzw. Leistungspfade realisieren, womit ein vergleichsweise breiter Geschwindigkeitsbereich abgebildet werden kann.

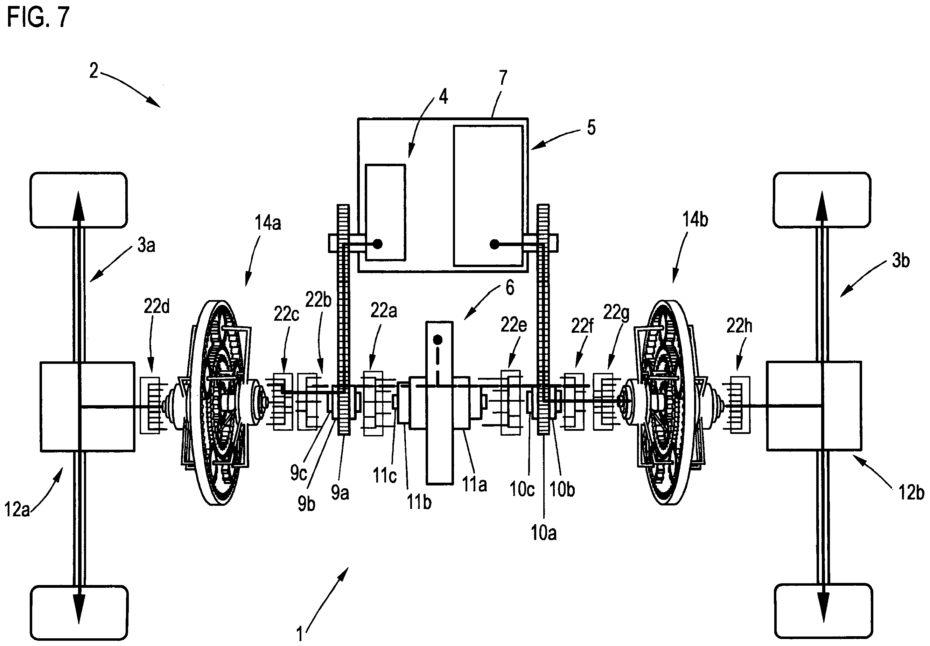

In dem in Fig. 7 gezeigten Ausführungsbeispiel ist ein Beispiel einer für eine maximale Beschleunigung des mit der Antriebsvorrichtung 1 ausgestatteten Kraftfahrzeugs 2 vorgesehenen Konfiguration der Antriebsvorrichtung 1 veranschaulicht. Der Antrieb des Kraftfahrzeugs 2 erfolgt hier sowohl über die Vorderachse 3a als auch über die Hinterachse 3b. Wie durch die Pfeile angedeutet, wird die auf die Vorderachse 3a aufgebrachte Antriebsleistung durch die erste Antriebseinrichtung 4, d. h. den im Vergleich "kleineren" Verbrennungsmotor, und zusätzlich über die dritte Antriebseinrichtung 6, d. h. den Elektromotor, bereitgestellt. Die auf die Hinterachse 3b aufgebrachte Antriebsleistung wird durch die zweite Antriebseinrichtung 5, d. h. den im Vergleich "größeren" Verbrennungsmotor, optional zusätzlich über die dritte Antriebseinrichtung 6, d. h. den Elektromotor, bereitgestellt. Die Antriebsleistung lässt sich über eine Regelung der Drehzahl der ersten Antriebseinrichtung 4, der zweiten Antriebseinrichtung 5 und der dritten Antriebseinrichtung 6 steuern. Über die Kopplungseinrichtungen 22a - 22h und die Getriebeeinrichtungen 14a, 14b lassen sich unterschiedliche Momenten- bzw. Leistungspfade realisieren, womit wiederum ein vergleichsweise breiter Geschwindigkeitsbereich abgebildet werden kann.

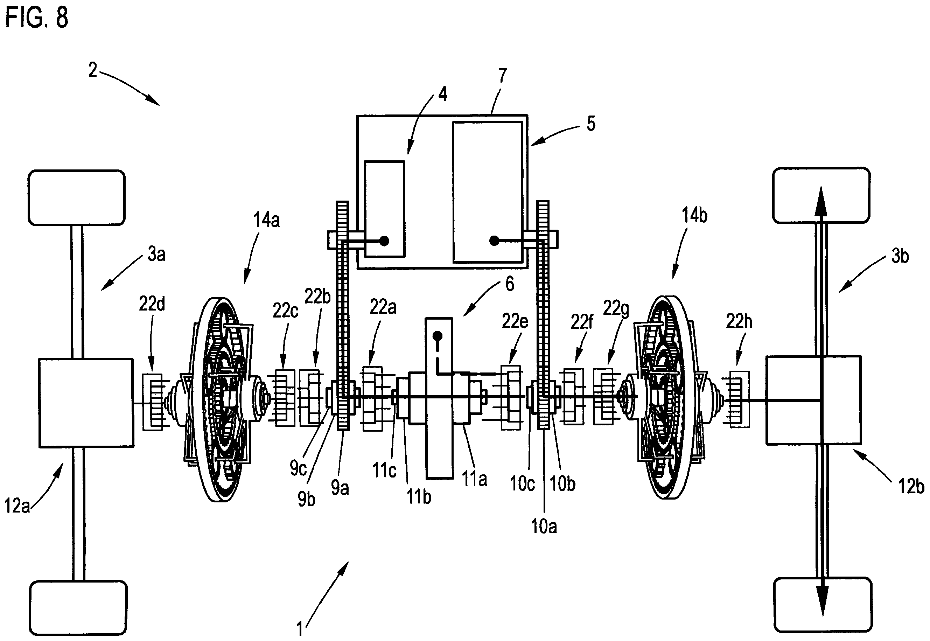

In dem in Fig. 8 gezeigten Ausführungsbeispiel ist ein Beispiel einer für eine sportliche Betriebsweise des mit der Antriebsvorrichtung 1 ausgestatteten Kraftfahrzeugs 2 vorgesehenen Konfiguration der Antriebsvorrichtung 1 veranschaulicht. Der Antrieb des Kraftfahrzeugs 2 erfolgt hier allein über die Hinterachse 3b. Wie durch die Pfeile angedeutet, wird die auf die Hinterachse 3b aufgebrachte Antriebsleistung durch die erste Antriebseinrichtung 4, d. h. den im Vergleich "kleineren" Verbrennungsmotor, die zweite Antriebseinrichtung 5, d. h. den im Vergleich "größeren" Verbrennungsmotor, und (optional) zusätzlich über die dritte Antriebseinrichtung 6, d. h. den Elektromotor, bereitgestellt. Die Antriebsleistung lässt sich über eine Regelung der Drehzahl der ersten Antriebseinrichtung 4, der zweiten Antriebseinrichtung 5 und der dritten Antriebseinrichtung 6 steuern. Über die Kopplungseinrichtungen 22a, 22e - 22h und die Getriebeeinrichtung 14b lassen sich unterschiedliche Momenten- bzw. Leistungspfade realisieren, womit wiederum ein vergleichsweise breiter Geschwindigkeitsbereich abgebildet werden kann.

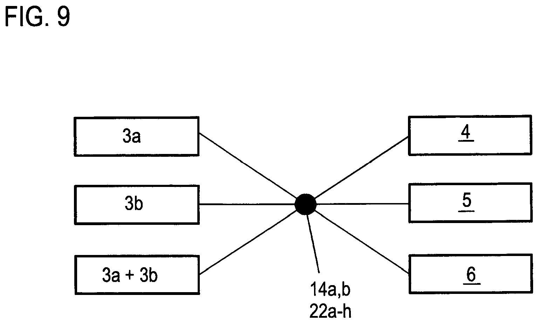

Anhand der in Fig. 9 gezeigten Prinzipdarstellung ist eine allgemeine Übersicht gezeigt, aus welcher sich ergibt, in welcher Weise sich einzelne, mehrere oder alle Antriebseinrichtungen 4 -6 mit der oder einer antreibbaren Vorderachse 3a und/oder der oder einer antreibbaren Hinterachse 3b koppeln lassen.

Es ist noch anzumerken, dass wenigstens einer Antriebseinrichtung 4 - 6 eine mehrere Schaltstufen umfassende Schaltgetriebeeinrichtung (nicht gezeigt) zugeordnet sein kann. In diesem Fall kann eine Steuereinrichtung dazu eingerichtet sein, während eines Schaltvorgangs einer einer Antriebseinrichtung 4 - 6 zugeordneten Schaltgetriebeeinrichtung die über diese Antriebseinrichtung 4 - 6 vor dem Schaltvorgang bereitgestellte Antriebsleistung über wenigstens eine weitere Antriebseinrichtung 4 - 6 bereitzustellen. Derart ist ein ruckfreies Schalten realisierbar; die über die geschaltete Antriebseinrichtung 4 - 6 eigentlich aufgebrachte Zugkraft wird während eines Schaltvorgangs dieser Antriebseinrichtung 4 - 6 zeitweise, d. h. insbesondere während des Schaltvorgangs, über wenigstens eine weitere Antriebseinrichtung 4 - 6 bereitgestellt.

## Patentansprüche

1. Antriebsvorrichtung (1) für ein Kraftfahrzeug (2), umfassend:
- eine erste motorische Antriebseinrichtung (4) mit wenigstens einem drehbaren Antriebselement (9a - 9c) und wenigstens eine weitere motorische Antriebseinrichtung (5, 6) mit wenigstens einem drehbaren Antriebselement (10a - 10c, 11a - 11c),
- wenigstens eine mit einer kraftfahrzeugseitigen Antriebsachse (3, 3a, 3b) koppelbare oder gekoppelte Abtriebseinrichtung (12, 12a, 12b) mit wenigstens einem drehbaren Abtriebselement (13),
- wenigstens eine mit der ersten motorischen Antriebseinrichtung (4) und/oder mit der wenigstens einen weiteren motorischen Antriebseinrichtung (5, 6) und/oder mit der Abtriebseinrichtung (12, 12a, 12b) koppelbare oder gekoppelte Getriebeeinrichtung (14, 14a, 14b) mit wenigstens einem drehbaren Getriebeelement,
- wenigstens eine in unterschiedliche Kopplungs- und/oder Entkopplungszustände schaltbare Kopplungseinrichtung (22, 22a - 22h), welche zur Kopplung und/oder Entkopplung des oder wenigstens eines drehbaren Antriebselements (9a - 9c) der ersten motorischen Antriebseinrichtung (4) mit dem oder wenigstens einem drehbaren Getriebeelement der wenigstens einen Getriebeeinrichtung (14, 14a, 14b), und/oder
zur Kopplung und Entkopplung des oder wenigstens eines drehbaren Antriebselements (10a - 10c, 11a - 11c) der oder wenigstens einer weiteren motorischen Antriebseinrichtung (5, 6) mit dem oder wenigstens einem drehbaren Getriebeelement der wenigstens einen Getriebeeinrichtung (14, 14a, 14b), und/oder
zur Kopplung und/oder Entkopplung des oder wenigstens eines drehbaren Getriebeelements der wenigstens einen Getriebeeinrichtung (14, 14, 14b) mit wenigstens einem drehbaren Abtriebselement (13) der Abtriebseinrichtung (12, 12a, 12b) eingerichtet ist,
**gekennzeichnet durch**
drei motorische Antriebsvorrichtungen (4 - 6), zwei Getriebeeinrichtungen (14a, 14b), eine mit einer kraftfahrzeugseitigen antreibbaren Vorderachse (3a) koppelbare oder gekoppelte Abtriebseinrichtung (12a), eine mit einer kraftfahrzeugseitigen antreibbaren Hinterachse (3b) koppelbare oder gekoppelte Abtriebseinrichtung (12b) und mehrere Kopplungseinrichtungen (22a - 22h), wobei
- eine erste Kopplungseinrichtung (22a) zur Kopplung und Entkopplung wenigstens eines Antriebselements (9a - 9c) einer ersten motorischen Antriebseinrichtung (4) mit und von wenigstens einem Antriebselement (10a - 10c) einer zweiten motorischen Antriebseinrichtung (5) und/oder wenigstens einem Antriebselement (11a -11c) einer dritten motorischen Antriebseinrichtung (6) eingerichtet ist,
- eine zweite Kopplungseinrichtung (22b) zur Kopplung und Entkopplung eines mit mit wenigstens einem Antriebselement (9a - 9c) der ersten motorischen Antriebseinrichtung (4) und/oder wenigstens einem Antriebselement (10a - 10b) der zweiten motorischen Antriebseinrichtung (5) und/oder wenigstens einem Antriebselement (11a - 11c) der dritten motorischen Antriebseinrichtung (6) gekoppelten Kopplungselements der zweiten Kopplungseinrichtung (22b) mit und von wenigstens einem Kopplungselement einer einer ersten Getriebeeinrichtung (14a) antriebsseitig vorgeschalteten dritten Kopplungseinrichtung (22c) eingerichtet ist,
- die der ersten Getriebeeinrichtung (14a) antriebsseitig vorgeschaltete dritte Kopplungseinrichtung (22c) zur Kopplung und Entkopplung eines mit mit wenigstens einem Antriebselement (9a - 9c) der ersten motorischen Antriebseinrichtung (4) und/oder wenigstens einem Antriebselement (10a - 10c) der zweiten motorischen Antriebseinrichtung (5) und/oder wenigstens einem Antriebselement (11a - 11c) der dritten motorischen Antriebseinrichtung (6) gekoppelten Kopplungselements der zweiten Kopplungseinrichtung (22b) gekoppelten Kopplungselements der dritten Kopplungseinrichtung (22c) mit und von wenigstens einem antriebsseitigen drehbaren Getriebeelement der ersten Getriebeeinrichtung (14a) eingerichtet ist,
- eine vierte Kopplungseinrichtung (22d) zur Kopplung und Entkopplung wenigstens eines abtriebsseitigen drehbaren Getriebeelements der ersten Getriebeeinrichtung (14a) mit und von wenigstens einem Abtriebselement der mit einer kraftfahrzeugseitigen antreibbaren Vorderachse (3a) koppelbaren oder gekoppelten Abtriebseinrichtung (12a) eingerichtet ist,
- eine fünfte Kopplungseinrichtung (22e) zur Kopplung und Entkopplung wenigstens eines Antriebselements (10a - 10c) der zweiten motorischen Antriebseinrichtung (5) mit und von wenigstens einem Antriebselement (9a - 9c) der ersten motorischen Antriebseinrichtung (4) und/oder wenigstens einem Antriebselement (11a - 11c) der dritten motorischen Antriebseinrichtung (6) eingerichtet ist,
- eine sechste Kopplungseinrichtung (22f) zur Kopplung und Entkopplung eines mit wenigstens einem Antriebselement (9a - 9c) der ersten motorischen Antriebseinrichtung (4) und/oder wenigstens einem Antriebselement (10a - 10c) der zweiten motorischen Antriebseinrichtung (5) und/oder wenigstens einem Antriebselement (11a - 11c) der dritten motorischen Antriebseinrichtung (6) gekoppelten Kopplungselements der fünften Kopplungseinrichtung (22f) mit und von wenigstens einem Kopplungselement einer einer zweiten Getriebeeinrichtung (14b) antriebsseitig vorgeschalteten siebten Kopplungseinrichtung (22g) eingerichtet ist,
- die der sechsten Getriebeeinrichtung (22f) antriebsseitig vorgeschaltete siebte Kopplungseinrichtung (22g) zur Kopplung und Entkopplung eines mit mit wenigstens einem Antriebselement (9a - 9c) der ersten motorischen Antriebseinrichtung (4) und/oder wenigstens einem Antriebselement (10a - 10c) der zweiten motorischen Antriebseinrichtung (5) und/oder wenigstens einem Antriebselement (11a - 11c) der dritten motorischen Antriebseinrichtung (5) gekoppelten Kopplungselements der sechsten Kopplungseinrichtung (22f) gekoppelten Kopplungselements der siebten Kopplungseinrichtung (22g) mit und von wenigstens einem antriebsseitigen drehbaren Getriebeelement der zweiten Getriebeeinrichtung (14b) eingerichtet ist,
- eine achte Kopplungseinrichtung (22h) zur Kopplung und Entkopplung wenigstens eines abtriebsseitigen drehbaren Getriebeelements der zweiten Getriebeeinrichtung (14b) mit und von wenigstens einem Abtriebselement der mit einer kraftfahrzeugseitigen antreibbaren Hinterachse (3b) koppelbaren oder gekoppelten Abtriebseinrichtung (12b) eingerichtet ist.

2. Antriebsvorrichtung nach Anspruch 1,
**dadurch gekennzeichnet,**
**dass** die drei motorischen Antriebseinrichtungen (4 - 6) in wenigstens einem bestimmten Drehzahlbereich unterschiedliche, insbesondere drehzahlabhängige, Momenten- und/oder Leistungskennlinien aufweisen.

3. Antriebsvorrichtung nach Anspruch 2,
**gekennzeichnet durch**
eine Schalteinrichtung zum Schalten der wenigstens einen Kopplungseinrichtung (22, 22a - 22h) in unterschiedliche Kopplungs- und Entkopplungszustände, wobei die Schalteinrichtung dazu eingerichtet ist,
die jeweiligen motorischen Antriebseinrichtungen (4 - 6) über die wenigstens eine Getriebeeinrichtung (14, 14a, 14b) derart mit der oder wenigstens einer Abtriebseinrichtung (12, 12a, 12b) zu koppeln, dass die jeweiligen motorischen Antriebseinrichtungen (4 - 6) im Hinblick auf wenigstens eine in Abhängigkeit einer aktuellen oder künftigen Betriebsart eines mit der Antriebsvorrichtung (1) ausgestatteten Kraftfahrzeugs (2) ermittelten Zielgröße, insbesondere eine Zielgeschwindigkeit, in einem jeweiligen antriebseinrichtungsspezifischen wirkungsgradoptimalen Momenten- und/oder Leistungskennlinienbereich betreibbar oder betrieben sind.

4. Antriebsvorrichtung nach einem der vorangehenden Ansprüche,
**dadurch gekennzeichnet,**
**dass** eine erste motorische Antriebseinrichtung (4) als Verbrennungsmotor ausgebildet oder ist einen solchen umfasst und wenigstens eine weitere motorische Antriebseinrichtung (5) als Verbrennungsmotor ausgebildet ist oder einen solchen umfasst, wobei ein die erste motorische Antriebseinrichtung (4) bildender oder von dieser umfasster erster Verbrennungsmotor und ein die wenigstens eine weitere motorische Antriebseinrichtung (5) bildender oder von dieser umfasster weiterer Verbrennungsmotor eine gleiche oder ungleiche Anzahl an Zylindern und/oder ein gleiches oder ungleiches Hub- und/oder Bohrungsverhältnis aufweisen.

5. Antriebsvorrichtung nach Anspruch 4,
**dadurch gekennzeichnet,**
**dass** ein die erste motorische Antriebseinrichtung (4) bildender oder von dieser umfasster erster Verbrennungsmotor und ein die wenigstens eine weitere motorische Antriebseinrichtung (5) bildender oder von dieser umfasster weiterer Verbrennungsmotor Verbrennungsmotorteile einer wenigstens zwei motorische Verbrennungsmotorteile umfassenden Verbrennungsmotoreinheit (7) bilden.

6. Antriebsvorrichtung nach Anspruch 5,
**dadurch gekennzeichnet,**
**dass** der die erste motorische Antriebseinrichtung (4) bildende oder von dieser umfasste erste Verbrennungsmotor und der die wenigstens eine weitere Antriebseinrichtung (5) bildende oder von diese umfasste weitere Verbrennungsmotor gemeinsam einem einen Verbrennungsraum Verbrennungsmotoreinheit (7) abschließenden Zylinderkopf (8) der Verbrennungsmotoreinheit (7) zuordenbar oder zugeordnet sind.

7. Antriebsvorrichtung nach einem der vorangehenden Ansprüche,
**dadurch gekennzeichnet,**
**dass** die wenigstens eine oder wenigstens eine Getriebeeinrichtung (14, 14a, 14b) als ein ein- oder mehrstufiges Planetengetriebe ausgebildet ist oder ein solches umfasst, wobei das Planetengetriebe als drehbare Getriebeelemente wenigstens ein Sonnenrad (15), wenigstens einen Planetenträger (16, 18) mit einer Anzahl an Planetenrädern (17, 19) und wenigstens ein Hohlrad (20, 21) umfasst.

8. Antriebsvorrichtung nach Anspruch 7,
**dadurch gekennzeichnet,**
**dass** die wenigstens eine Kopplungseinrichtung (22, 22a - 22h) dazu eingerichtet ist, das wenigstens eine Antriebselement (9a - 9c) der ersten motorischen Antriebseinrichtung (4) mit dem wenigstens einen Sonnenrad (15) oder dem wenigstens einen Planetenträger (16, 18) oder dem wenigstens einen Hohlrad (20, 21) zu koppeln oder von dem wenigstens einen Sonnenrad (15) oder dem wenigstens einen Planetenträger (16, 18) oder dem wenigstens einen Hohlrad (20, 21) zu entkoppeln, und/oder
**dass** die wenigstens eine Kopplungseinrichtung (22, 22a - 22h) dazu eingerichtet ist, das wenigstens eine Antriebselement (10a - 10c, 11a - 11c) der oder wenigstens einer weiteren motorischen Antriebseinrichtung (5, 6) mit dem wenigstens einen Sonnenrad (15) oder dem wenigstens einen Planetenträger (16, 18) oder dem wenigstens einen Hohlrad (20, 21) zu koppeln oder von dem wenigstens einen Sonnenrad (15) oder dem wenigstens einen Planetenträger (16, 18) oder dem wenigstens einen Hohlrad (20, 21) zu entkoppeln, und/oder
**dass** die wenigstens eine Kopplungseinrichtung (22, 22a - 22h) dazu eingerichtet ist, das wenigstens eine Abtriebselement (13) der Abtriebseinrichtung (12, 12a, 12b) mit dem wenigstens einen Sonnenrad (15) oder dem wenigstens einen Planetenträger (16, 18) oder dem wenigstens einen Hohlrad (20, 21) zu koppeln oder von dem wenigstens einen Sonnenrad (15) oder dem wenigstens einen Planetenträger (16, 18) oder dem wenigstens einen Hohlrad (20, 21) zu entkoppeln.

9. Antriebsvorrichtung nach einem der vorangehenden Ansprüche,
**dadurch gekennzeichnet,**
**dass** die wenigstens eine Getriebeeinrichtung (14, 14a, 14b) oder wenigstens eine, gegebenenfalls weitere, Getriebeeinrichtung (14, 14a, 14b) als stufenloses Getriebe oder als Differentialgetriebe ausgebildet ist oder wenigstens ein solches umfasst.

10. Antriebsvorrichtung nach einem der vorangehenden Ansprüche,
**dadurch gekennzeichnet,**
**dass** die erste motorische Antriebsvorrichtung (4) als erster Verbrennungsmotor ausgebildet ist oder einen ersten Verbrennungsmotor umfasst, die zweite motorische Antriebsvorrichtung (5) als zweiter Verbrennungsmotor ausgebildet ist oder einen zweiten Verbrennungsmotor umfasst und die dritte motorische Antriebsvorrichtung (6) als Elektromotor ausgebildet ist oder einen Elektromotor umfasst.

11. Antriebsvorrichtung nach einem der vorangehenden Ansprüche,
**gekennzeichnet durch**
eine Steuereinrichtung, welche dazu eingerichtet ist, von jeweiligen motorischen Antriebseinrichtungen (4 - 6) erzeugbare oder erzeugte Antriebsleistungen über bestimmte kopplungseinrichtungsseitige Kopplungszustände zumindest zum Teil auf unterschiedliche Antriebsachsen (3a, 3b) eines mit der Antriebsvorrichtung (19 ausgestatteten Kraftfahrzeugs (2) aufzuteilen.

12. Antriebsvorrichtung nach einem der vorangehenden Ansprüche,
**dadurch gekennzeichnet,**
**dass** wenigstens einer motorischen Antriebseinrichtung (4 - 6) eine mehrere Schaltstufen umfassende Schaltgetriebeeinrichtung zugeordnet ist, wobei die oder eine Steuereinrichtung dazu eingerichtet ist, während eines Schaltvorgangs einer einer motorischen Antriebseinrichtung zugeordneten Schaltgetriebeeinrichtung die über diese motorische Antriebseinrichtung (4 - 6) vor dem Schaltvorgang bereitgestellte Antriebsleistung über wenigstens eine weitere motorische Antriebseinrichtung (4 - 6) bereitzustellen.

13. Antriebsvorrichtung nach einem der vorangehenden Ansprüche,
**dadurch gekennzeichnet,**
**dass** wenigstens zwei motorische Antriebseinrichtungen (4, 5) als Verbrennungsmotoren ausgebildet sind oder solche umfassen, wobei jeweiligen Verbrennungsmotoren verbrennungsmotorspezifische Nebenaggregatkomponenten, insbesondere Anlassereinrichtungen, Pumpeneinrichtungen, Triebmittel, elektrische Generatoren, Turbolader- oder Kompressoreinrichtungen, gemeinsam zuordenbar oder zugeordnet sind.

14. Kraftfahrzeug (2), umfassend wenigstens eine Antriebsvorrichtung (1) nach einem der vorangehenden Ansprüche.

## Claims

1. Motor drive device (1) for a motor vehicle (2), comprising:
- a first motor drive apparatus (4) having at least one rotatable drive element (9a - 9c) and at least one further motor drive apparatus (5, 6) having at least one rotatable drive element (10a - 10c, 11a - 11c),
- at least one output apparatus (12, 12a, 12b) which can be or is coupled to a motor-vehicle drive axle (3, 3a, 3b) and which has at least one rotatable output element (13),
- at least one gear apparatus (14, 14a, 14b) which can be or is coupled to the first motor drive apparatus (4) and/or to the at least one further motor drive apparatus (5, 6) and/or to the output apparatus (12, 12a, 12b) and which has at least one rotatable gear element,
- at least one coupling apparatus (22, 22a-22h) which can be switched into different coupling and/or uncoupling states and which is designed to couple and/or uncouple the or at least one rotatable drive element (9a - 9c) of the first motor drive apparatus (4) to or from the or at least one rotatable gear element of the at least one gear apparatus (14, 14a, 14b), and/or
to couple and uncouple the or at least one rotatable drive element (10a - 10c, 11a - 11c) of the or at least one further motor drive apparatus (5, 6) to or from the or at least one rotatable gear element of the at least one gear apparatus (14, 14a, 14b), and/or
to couple and/or uncouple the or at least one rotatable gear element of the at least one gear apparatus (14, 14a, 14b) to or from at least one rotatable output element (13) of the output apparatus (12, 12a, 12b),
**characterised by**
three motor drive devices (4 - 6), two gear apparatuses (14a, 14b), an output apparatus (12a) which can be coupled or is coupled to a front axle (3a) which can be driven by the motor vehicle, an output apparatus (12b) which can be coupled or is coupled to a rear axle (3b) which can be driven by the motor vehicle, and a plurality of coupling apparatuses (22a - 22h), wherein
- a first coupling apparatus (22a) is configured to couple and decouple at least one drive element (9a - 9c) of a first motor drive apparatus (4) to and from at least one drive element (10a - 10c) of a second motor drive apparatus (5) and/or at least one drive element (11a - 11c) of a third motor drive apparatus (6),
- a second coupling apparatus (22b) is configured to couple and decouple a coupling element of the second coupling apparatus (22b), which element is coupled to at least one drive element (9a-9c) of the first motor drive apparatus (4) and/or at least one drive element (10a - 10b) of the second motor drive apparatus (5) and/or at least one drive element (11a - 11c) of the third motor drive apparatus (6), to and from at least one coupling element of a third coupling apparatus (22c) connected upstream of a first gear apparatus (14a) on the drive side,
- the third coupling apparatus (22c), which is connected upstream of the first gear apparatus (14a) on the drive side, is configured to couple and decouple, to and from at least one drive-side rotatable gear element of the first gear apparatus (14a), coupling element of the third coupling apparatus (22c), which element is coupled to a coupling element of the second coupling apparatus (22b) coupled to at least one drive element (9a - 9c) of the first motor drive apparatus (4) and/or at least one drive element (10a - 10c) of the second motor drive apparatus (5) and/or at least one drive element (11a - 11c) of the third motor drive apparatus (6),
- a fourth coupling apparatus (22d) is configured to couple and decouple at least one output-side rotatable gear element of the first gear apparatus (14a) to and from at least one output element of the output apparatus (12a) which can be coupled or is coupled to a front axle (3a) which can be driven by the motor vehicle,
- a fifth coupling apparatus (22e) is configured to couple and decouple at least one drive element (10a -10c) of the second motor drive apparatus (5) to and from at least one drive element (9a - 9c) of the first motor drive apparatus (4) and/or at least one drive element (11a - 11c) of the third motor drive apparatus (6),
- a sixth coupling apparatus (22f) is configured to couple and decouple a coupling element of the fifth coupling apparatus (22f), which element is coupled to at least one drive element (9a - 9c) of the first motor drive apparatus (4) and/or at least one drive element (10a - 10c) of the second motor drive apparatus (5) and/or at least one drive element (11a - 11c) of the third motor drive apparatus (6), to and from at least one coupling element of a seventh coupling apparatus (22g) connected upstream of a second gear apparatus (14b) on the drive side,
- the seventh coupling apparatus (22g), which is connected upstream of the sixth gear apparatus (22f) on the drive side, is configured to couple and decouple, to and from at least one drive-side rotatable gear element of the second gear apparatus (14b), a coupling element of the seventh coupling apparatus (22g), which coupling element is coupled to a coupling element of the sixth coupling apparatus (22f) coupled to at least one drive element (9a - 9c) of the first motor drive apparatus (4) and/or at least one drive element (10a - 10c) of the second motor drive apparatus (5) and/or at least one drive element (11a - 11c) of the third motor drive apparatus (5),
- an eighth coupling apparatus (22h) is configured to couple and decouple at least one output-side rotatable gear element of the second gear apparatus (14b) to and from at least one output element of the output apparatus (12b) which can be coupled or is coupled to a motor-vehicle drivable rear axle (3b).

2. Motor drive device according to claim 1,
**characterised in that**
the three motor drive apparatuses (4 - 6) have different, in particular speed-dependent, torque and/or power characteristic curves in at least one specific speed range.

3. Motor drive device according to claim 2,
**characterised by**
a switching apparatus for switching the at least one coupling apparatus (22, 22a - 22h) into different coupling and decoupling states, wherein the switching apparatus is configured to couple the respective motor drive apparatuses (4 - 6) via the at least one gear apparatus (14, 14a, 14b) to the or at least one output apparatus (12, 12a, 12b) in such a manner that the respective motor drive apparatuses (4-6) can be operated or are operated with regard to at least one target variable, in particular a target speed, which is determined as a function of a current or future operating mode of a motor vehicle (2) equipped with the motor drive device (1), in a respective drive apparatus-specific, efficiency-optimised torque and/or power characteristic curve range.

4. Motor drive device according to any one of the preceding claims,
**characterised in that**
a first motor drive apparatus (4) is designed as an internal combustion engine or comprises such an engine and at least one further motor drive apparatus (5) is designed as an internal combustion engine or comprises such an engine, wherein a first internal combustion engine forming the first motor drive apparatus (4) or included therein and a further internal combustion engine forming the at least one further motor drive apparatus (5) or included therein have an equal or unequal number of cylinders and/or an equal or unequal stroke and/or bore ratio.

5. Motor drive device according to claim 4,
**characterised in that**
a first internal combustion engine, which forms the first motor drive apparatus (4) or is included therein, and a further internal combustion engine, which forms the at least one further motor drive apparatus (5) or is included therein, form internal combustion engine parts of an internal combustion engine unit (7) comprising at least two motor internal combustion engine parts.

6. Motor drive device according to claim 5,
**characterised in that**
the first internal combustion engine, which forms the first motor drive apparatus (4) or is included therein, and the further internal combustion engine, which forms the at least one further drive apparatus (5) or is included therein, can be associated or are associated jointly with a cylinder head (8) of the internal combustion engine unit (7), which cylinder head closes off a combustion chamber of the internal combustion engine unit (7).

7. Motor drive device according to any one of the preceding claims, **characterised in that**
the at least one or at least one gear apparatus (14, 14a, 14b) is designed as or comprises a single-stage or multi-stage planetary gear, wherein the planetary gear comprises as rotatable gear elements at least one sun gear (15), at least one planet carrier (16, 18) with a number of planet gears (17, 19) and at least one ring gear (20, 21).

8. Motor drive device according to claim 7,
**characterised in that**
the at least one coupling apparatus (22, 22a - 22h) is configured to couple the at least one drive element (9a - 9c) of the first motor drive apparatus (4) to the at least one sun gear (15) or the at least one planet carrier (16, 18) or the at least one ring gear (20, 21) or to decouple said element from the at least one sun gear (15) or the at least one planet carrier (16, 18) or the at least one ring gear (20, 21) and/or
the at least one coupling apparatus (22, 22a - 22h) is configured to couple the at least one drive element (10a - 10c, 11a - 11c) of the or at least one further motor drive apparatus (5, 6) to the at least one sun gear (15) or the at least one planet carrier (16, 18) or the at least one ring gear (20, 21) or to decouple said element from the at least one sun gear (15) or the at least one planet carrier (16, 18) or the at least one ring gear (20, 21) and/or
the at least one coupling apparatus (22, 22a - 22h) is configured to couple the at least one output element (13) of the output apparatus (12, 12a, 12b) to the at least one sun gear (15) or the at least one planet carrier (16, 18) or the at least one ring gear (20, 21) or to decouple said element from the at least one sun gear (15) or the at least one planet carrier (16, 18) or the at least one ring gear (20, 21).

9. Motor drive device according to any one of the preceding claims,
**characterised in that**
the at least one gear apparatus (14, 14a, 14b) or at least one, optionally further, gear apparatus (14, 14a, 14b) is designed as a continuously variable gear or as a differential gear or comprises at least one such gear.

10. Motor drive device according to any one of the preceding claims,
**characterised in that**
the first motor drive device (4) is designed as a first combustion engine or comprises a first combustion engine, the second motor drive device (5) is designed as a second combustion engine or comprises a second combustion engine and the third motor drive device (6) is designed as an electric motor or comprises an electric motor.

11. Motor drive device according to any one of the preceding claims,
**characterised by**
a control apparatus which is configured to distribute drive powers which can be produced or are produced by respective motor drive apparatuses (4 - 6) at least partially to different drive axles (3a, 3b) of a motor vehicle (2) equipped with the motor drive device (19) by way of specific coupling apparatus-side coupling states.

12. Motor drive device according to any one of the preceding claims,
**characterised in that**
at least one motor drive apparatus (4 - 6) is assigned a gear shifting apparatus comprising a plurality of shift stages, wherein the or a control apparatus is configured to provide, during a shifting operation of a gear shifting apparatus assigned to a motor drive apparatus, the drive power provided via this motor drive apparatus (4 - 6) prior to the shifting operation via at least one further motor drive apparatus (4 - 6).

13. Motor drive device according to any one of the preceding claims,
**characterised in that**
at least two motor drive apparatuses (4, 5) are designed as internal combustion engines or comprise such engines, wherein auxiliary unit components specific to internal combustion engines, in particular starter apparatuses, pump apparatuses, drive means, electric generators, turbochargers or compressor apparatuses, can be associated or are associated jointly with the respective internal combustion engines.

14. Motor vehicle (2) comprising at least one motor drive device (1) according to any one of the preceding claims.

## Revendications

1. Dispositif d'entraînement (1) pour un véhicule automobile (2), comprenant :
- un premier dispositif d'entraînement motorisé (4) avec au moins un élément d'entraînement rotatif (9a - 9c) et au moins un autre dispositif d'entraînement motorisé (5, 6) avec au moins un élément d'entraînement rotatif (10a - 10c, 11a - 11c),
- au moins un dispositif d'entraînement (12, 12a, 12b) pouvant être couplé ou couplé à un essieu moteur (3, 3a, 3b) côté véhicule automobile avec au moins un élément d'entraînement rotatif (13),
- au moins un dispositif à engrenage (14, 14a, 14b) pouvant être couplé ou couplé au premier dispositif d'entraînement motorisé (4) et/ou à l'au moins un autre dispositif d'entraînement motorisé (5, 6) et/ou au dispositif d'entraînement (12, 12a, 12b) avec au moins un élément d'engrenage rotatif,
- au moins un dispositif de couplage (22, 22a-22h) pouvant être commuté dans différents états de couplage et/ou de découplage, lequel est agencé pour le couplage et/ou le découplage de ou d'au moins un élément d'entraînement rotatif (9a - 9c) du premier dispositif d'entraînement motorisé (4) au ou à au moins un élément d'engrenage rotatif de l'au moins un dispositif à engrenage (14, 14a, 14b), et/ou
pour le couplage et le découplage de ou d'au moins d'un élément d'entraînement rotatif (10a - 10c, 11a - 11c) de ou d'au moins un autre dispositif d'entraînement motorisé (5, 6) au ou à au moins un élément d'engrenage rotatif de l'au moins un dispositif à engrenage (14, 14a, 14b), et/ou
pour le couplage et/ou le découplage de ou d'au moins un élément d'engrenage rotatif de l'au moins un dispositif à engrenage (14, 14, 14b) à au moins un élément d'entraînement rotatif (13) du dispositif d'entraînement (12, 12a, 12b),
**caractérisé par**
trois dispositifs d'entraînement (4 - 6), deux dispositifs à engrenage (14a, 14b), un dispositif d'entraînement (12a) pouvant être couplé ou couplé à un essieu avant (3a) pouvant être entraîné côté véhicule automobile, un dispositif d'entraînement (12b) pouvant être couplé ou couplé à un essieu arrière (3b) pouvant être entraîné côté véhicule automobile et plusieurs dispositifs de couplage (22a - 22h), dans lequel
- un premier dispositif de couplage (22a) est agencé pour le couplage et le découplage d'au moins un élément d'entraînement (9a - 9c) d'un premier dispositif d'entraînement motorisé (4) à et depuis au moins un élément d'entraînement (10a - 10c) d'un deuxième dispositif d'entraînement motorisé (5) et/ou d'au moins un élément d'entraînement (11a - 11c) d'un troisième dispositif d'entraînement motorisé (6),
- un deuxième dispositif de couplage (22b) est agencé pour le couplage et le découplage d'un élément de couplage du deuxième dispositif de couplage (22b) couplé à au moins un élément d'entraînement (9a - 9c) du premier dispositif d'entraînement motorisé (4) et/ou au moins un élément d'entraînement (10a - 10b) du deuxième dispositif d'entraînement motorisé (5) et/ou au moins un élément d'entraînement (11a - 11c) du troisième dispositif d'entraînement motorisé (6) à et depuis au moins un élément de couplage d'un troisième dispositif de couplage (22c) branché en amont côté entraînement d'un premier dispositif à engrenage (14a),
- le troisième dispositif de couplage (22c) branché en amont côté entraînement du premier dispositif à engrenage (14a) est agencé pour le couplage et le découplage d'un élément de couplage du troisième dispositif de couplage (22c) couplé à l'élément de couplage du deuxième dispositif de couplage (22b) couplé à au moins un élément d'entraînement (9a - 9c) du premier dispositif d'entraînement motorisé (4) et/ou au moins un élément d'entraînement (10a - 10c) du deuxième dispositif d'entraînement motorisé (5) et/ou au moins un élément d'entraînement (11a - 11c) du troisième dispositif d'entraînement motorisé (6) à et depuis au moins un élément d'engrenage rotatif côté entraînement du premier dispositif à engrenage (14a),
- un quatrième dispositif de couplage (22d) est agencé pour le couplage et le découplage d'au moins un élément d'engrenage rotatif côté entraînement du premier dispositif à engrenage (14a) à et depuis au moins un élément d'entraînement du dispositif d'entraînement (12a) pouvant être couplé ou couplé à un essieu avant (3a) pouvant être entraîné côté véhicule automobile,
- un cinquième dispositif de couplage (22e) est agencé pour le couplage et le découplage d'au moins un élément d'entraînement (10a - 10c) du deuxième dispositif d'entraînement motorisé (5) à et depuis au moins un élément d'entraînement (9a - 9c) du premier dispositif d'entraînement motorisé (4) et/ou d'au moins un élément d'entraînement (11a - 11c) du troisième dispositif d'entraînement motorisé (6),
- un sixième dispositif de couplage (22f) est agencé pour le couplage et le découplage d'un élément de couplage du cinquième dispositif de couplage (22f) couplé à au moins un élément d'entraînement (9a - 9c) du premier dispositif d'entraînement motorisé (4) et/ou au moins un élément d'entraînement (10a - 10b) du deuxième dispositif d'entraînement motorisé (5) et/ou au moins un élément d'entraînement (11a - 11c) du troisième dispositif d'entraînement motorisé (6) à et depuis au moins un élément de couplage d'un septième dispositif de couplage (22g) branché en amont côté entraînement à un deuxième dispositif à engrenage (14b),
- le septième dispositif de couplage (22c) branché en amont côté entraînement du sixième dispositif à engrenage (22f) est agencé pour le couplage et le découplage d'un élément de couplage du septième dispositif de couplage (22g) couplé à l'élément de couplage du sixième dispositif de couplage (22f) couplé à au moins un élément d'entraînement (9a - 9c) du premier dispositif d'entraînement motorisé (4) et/ou au moins un élément d'entraînement (10a - 10c) du deuxième dispositif d'entraînement motorisé (5) et/ou au moins un élément d'entraînement (11a - 11c) du troisième dispositif d'entraînement motorisé (5) à et depuis au moins un élément d'engrenage rotatif côté entraînement du deuxième dispositif à engrenage (14b),
- un huitième dispositif de couplage (22h) est agencé pour le couplage et le découplage d'au moins un élément d'engrenage rotatif côté entraînement du deuxième dispositif à engrenage (14b) à et depuis au moins un élément d'entraînement du dispositif d'entraînement (12b) pouvant être couplé ou couplé à un essieu avant (3b) pouvant être entraîné côté véhicule automobile.

2. Dispositif d'entraînement selon la revendication 1,
**caractérisé en ce**
**que** les trois dispositifs d'entraînement motorisés (4 - 6) présentent dans au moins une certaine plage de vitesses différentes courbes caractéristiques de couples et de puissance, en particulier dépendant de la vitesse de rotation.

3. Dispositif d'entraînement selon la revendication 2,
**caractérisé par**
un dispositif de commutation pour commuter l'au moins un dispositif de couplage (22, 22a - 22h) dans différents états de couplage et de découplage, dans lequel le dispositif de commutation est agencé pour coupler les dispositifs d'entraînement motorisés (4 - 6) respectifs par l'intermédiaire de l'au moins un dispositif à engrenage (14, 14a, 14b) au ou à au moins un dispositif d'entraînement (12, 12a, 12b) de telle sorte que les dispositifs d'entraînement motorisés (4 - 6) respectifs peuvent fonctionner ou fonctionnent en ce qui concerne au moins un taille cible déterminée d'un véhicule automobile (2) équipé d'un dispositif d'entraînement (1) en fonction d'un mode de fonctionnement actuel ou futur, en particulier une vitesse cible, dans une plage de courbes caractéristiques de couples et/ou de puissance de rendement optimal spécifique au dispositif d'entraînement respectif.

4. Dispositif d'entraînement selon l'une quelconque des revendications précédentes,
**caractérisé en ce**
**qu'**un premier dispositif d'entraînement motorisé (4) est conçu comme moteur à combustion interne ou comprend un moteur de ce type et au moins un autre dispositif d'entraînement motorisé (5) est conçu comme moteur à combustion interne ou comprend un moteur de ce type, dans lequel un premier moteur à combustion interne formant le premier dispositif d'entraînement motorisé (4) ou compris par celui-ci et un autre moteur à combustion interne formant l'au moins un autre dispositif d'entraînement motorisé (5) ou compris par celui-ci présentent un nombre identique ou différent de cylindres et/ou un rapport de course et/ou d'alésage identique ou différent.

5. Dispositif d'entraînement selon la revendication 4,
**caractérisé en ce**
**qu'**un premier moteur à combustion interne formant le premier dispositif d'entraînement motorisé (4) ou compris par celui-ci et un autre moteur à combustion interne formant l'au moins un autre dispositif d'entraînement motorisé (5) ou compris par celui-ci forment des pièces de moteur à combustion interne d'une unité de moteur à combustion interne (7) comprenant au moins deux pièces de moteur à combustion interne motorisées.

6. Dispositif d'entraînement selon la revendication 5,
**caractérisé en ce**
**que** le premier moteur à combustion interne formant le premier dispositif d'entraînement motorisé (4) ou compris par celui-ci et l'autre moteur à combustion interne formant l'au moins un autre dispositif d'entraînement (5) ou compris par celui-ci peuvent être associés ou sont associés conjointement à une culasse (8) de l'unité de moteur à combustion interne (7) obturant une unité de moteur à combustion interne (7) à chambre de combustion.

7. Dispositif d'entraînement selon l'une quelconque des revendications précédentes, **caractérisé en ce**
**que** l'au moins un ou au moins un dispositif à engrenage (14, 14a, 14b) est conçu comme un engrenage planétaire à un ou plusieurs étages ou comprend un engrenage de ce type, dans lequel l'engrenage planétaire comprend comme éléments d'engrenage rotatifs au moins un pignon solaire (15), au moins un porte-satellites (16, 18) avec un nombre de roues planétaires (17, 19) et au moins une couronne dentée (20, 21).

8. Dispositif d'entraînement selon la revendication 7,
**caractérisé en ce**
**que** l'au moins un dispositif de couplage (22, 22a - 22h) est agencé pour coupler l'au moins un élément d'entraînement (9a - 9c) du premier dispositif d'entraînement motorisé (4) à l'au moins un pignon solaire (15) ou l'au moins un porte-satellites (16, 18) ou l'au moins une couronne dentée (20, 21) ou pour découpler l'au moins un élément d'entraînement (9a - 9c) du premier dispositif d'entraînement motorisé (4) depuis l'au moins un pignon solaire (15) ou l'au moins un porte-satellites (16, 18) ou l'au moins une couronne dentée (20, 21), et/ou
**que** l'au moins un dispositif de couplage (22, 22a - 22h) est agencé pour coupler l'au moins un élément d'entraînement (10a - 10c, 11a - 11c) du ou d'au moins un autre dispositif d'entraînement motorisé (5, 6) à l'au moins un pignon solaire (15) ou l'au moins un porte-satellites (16, 18) ou l'au moins une couronne dentée (20, 21) ou pour découpler l'au moins un élément d'entraînement (10a - 10c, 11a - 11c) du ou d'au moins un autre dispositif d'entraînement motorisé (5, 6) depuis l'au moins un pignon solaire (15) ou l'au moins un porte-satellites (16, 18) ou l'au moins une couronne dentée (20, 21), et/ou
**que** l'au moins un dispositif de couplage (22, 22a - 22h) est agencé pour coupler l'au moins un élément d'entraînement (13) du dispositif d'entraînement (12, 12a, 12b) à l'au moins un pignon solaire (15) ou l'au moins un porte-satellites (16, 18) ou l'au moins une couronne dentée (20, 21) ou pour découpler l'au moins un élément d'entraînement (13) du dispositif d'entraînement (12, 12a, 12b) depuis l'au moins un pignon solaire (15) ou l'au moins un porte-satellites (16, 18) ou l'au moins une couronne dentée (20, 21).

9. Dispositif d'entraînement selon l'une quelconque des revendications précédentes,
**caractérisé en ce**
**que** l'au moins un dispositif à engrenage (14, 14a, 14b) ou au moins un, le cas échéant un autre, dispositif à engrenage (14, 14a, 14b) est conçu comme engrenage sans étage ou comme engrenage différentiel ou comprend au moins un engrenage de ce type.

10. Dispositif d'entraînement selon l'une quelconque des revendications précédentes,
**caractérisé en ce**
**que** le premier dispositif d'entraînement motorisé (4) est conçu comme premier moteur à combustion interne ou comprend un premier moteur à combustion interne, le deuxième dispositif d'entraînement motorisé (5) est conçu comme deuxième moteur à combustion interne ou comprend un deuxième moteur à combustion interne et le troisième dispositif d'entraînement motorisé (6) est conçu comme moteur électrique ou comprend un moteur électrique.

11. Dispositif d'entraînement selon l'une quelconque des revendications précédentes,
**caractérisé par**
un dispositif de commande, lequel et agencé pour séparer à partir des dispositifs d'entraînement motorisés (4 - 6) respectifs des puissances d'entraînement pouvant être produites ou produites par l'intermédiaire de certains états de couplage côté dispositif de couplage au moins en partie sur différents essieux moteurs (3a, 3b) d'un véhicule automobile (2) équipé du dispositif d'entraînement (19).

12. Dispositif d'entraînement selon l'une quelconque des revendications précédentes,
**caractérisé en ce**
**qu'**au moins un dispositif d'entraînement motorisé (4 - 6) est associé à un dispositif de transmission manuelle comprenant plusieurs étages de commutation, dans lequel le ou un dispositif de commande est agencé pour fournir pendant un changement de vitesse d'un dispositif de transmission manuelle associé à un dispositif d'entraînement motorisé la puissance d'entraînement fournie avant le changement de vitesse par l'intermédiaire dudit dispositif d'entraînement motorisé (4 - 6) par l'intermédiaire d'au moins un autre dispositif d'entraînement motorisé (4 - 6).

13. Dispositif d'entraînement selon l'une quelconque des revendications précédentes,
**caractérisé en ce**
**qu'**au moins deux dispositifs d'entraînement motorisés (4, 5) sont conçus comme moteurs à combustion interne ou comprennent des moteurs de ce type, dans lequel les moteurs à combustion interne respectifs peuvent être associés ou sont associés conjointement à des composants d'agrégats secondaires spécifiques au moteur à combustion interne, en particulier des dispositifs de démarrage, des dispositifs de pompage, un moyen d'entraînement, des générateurs électriques, des dispositifs de turbocompression ou de compression.

14. Véhicule automobile (2), comprenant au moins un dispositif d'entraînement (1) selon l'une quelconque des revendications précédentes.
